(19) Europäisches Patentamt
European Patent Office
Office européen des brevets

(11) **EP 3 686 864 A1**

(12) **EUROPEAN PATENT APPLICATION**
published in accordance with Art. 153(4) EPC

(43) Date of publication:
**29.07.2020 Bulletin 2020/31**

(51) Int Cl.:
**G08G 1/16** (2006.01)    **G01C 21/26** (2006.01)
**G05D 1/02** (2020.01)

(21) Application number: **18859647.2**

(22) Date of filing: **13.07.2018**

(86) International application number:
**PCT/JP2018/026527**

(87) International publication number:
**WO 2019/058720 (28.03.2019 Gazette 2019/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.09.2017 JP 2017182732**

(71) Applicant: **Sony Corporation
Tokyo 108-0075 (JP)**

(72) Inventors:
• **TOYOURA, Masataka
  Tokyo 108-0075 (JP)**
• **NABETA, Masaomi
  Tokyo 108-0075 (JP)**

(74) Representative: **Witte, Weller & Partner
Patentanwälte mbB
Postfach 10 54 62
70047 Stuttgart (DE)**

(54) **INFORMATION PROCESSING DEVICE, AUTONOMOUS MOVING APPARATUS, METHOD, AND PROGRAM**

(57)    An autonomous mobile device is implemented that adjusts a sensor rate according to a situation, and enables both reduction of power consumption and processing resources, and safe traveling. The autonomous mobile device includes: a sensor; a sensor information analysis unit that generates sensor analysis information by inputting output information from the sensor; an action plan determination unit that generates an action plan by inputting the sensor analysis information; a sensor rate calculation unit that calculates an optimal sensor rate of the sensor on the basis of at least one of the sensor analysis information or the action plan information; and a sensor control unit that adjusts either a sensing rate of the sensor or an output rate of sensor output information to the optimal sensor rate.

FIG. 1

EP 3 686 864 A1

**Description**

TECHNICAL FIELD

The present disclosure relates to an information processing device, an autonomous mobile device, a method, and a program. More specifically, the present disclosure relates to an information processing device, an autonomous mobile device, a method, and a program that implement reduction of power consumption and processing resources by controlling processing rates of various sensors necessary for autonomous mobility.

BACKGROUND ART

Recently, development has been actively performed related to a so-called autonomous mobile device such as an automatic driving vehicle or a robot that walks or runs while avoiding an obstacle by using various types of information acquired from sensors such as a camera and a distance sensor.

For example, in Patent Document 1 (Japanese Patent Application Laid-Open No. 11-212640), a technology is disclosed related to automatic driving in which setting of action plans such as traveling route determination is executed on the basis of observation values of various sensors, and action control is performed on the basis of the set action plans.

Patent Document 1 further discloses a configuration in which in a case where some of mounted sensors fail, a detection error part of the failed sensors is compensated by using detection information of other normal sensors. With this configuration, a safer automatic driving system is implemented.

The configuration described in Patent Document 1 includes a plurality of sensors, and even in a case where a failure occurs in one of the sensors, achieves safe traveling by using other sensors.

However, automobiles are required to suppress battery consumption, and there is a problem that power consumption becomes excessive in the configuration using the plurality of sensors as described in the above document.

Furthermore, as a conventional technology, Patent Document 2 (Japanese Patent Application Laid-Open No. 2011-207444) discloses a configuration for reducing battery consumption. Patent Document 2 relates to a security function of automobiles, and discloses a configuration that achieves power saving of detection means such as a camera provided in a parked automobile.

The mode for power supply from the battery to the camera provided in the automobile is switched between two modes of a power saving mode that suppresses power consumption and a drive mode that does not suppress power consumption, whereby battery consumption is suppressed.

Specifically, in a case where an automobile is parked, the power saving mode is set to suppress battery consumption, and in a case where an approaching person to the automobile is detected, the power saving mode is changed to the drive mode, whereby a reliable security function is implemented.

Although the configuration of Patent Document 2 is a configuration that achieves power saving, Patent Document 2 only discloses a reduction in battery consumption of a parked automobile, and does not disclose a configuration that achieves reduction in power consumption of a traveling automobile.

CITATION LIST

PATENT DOCUMENT

Patent Document 1: Japanese Patent Application Laid-Open No. 11-212640

Patent Document 2: Japanese Patent Application Laid-Open No. 2011-207444

SUMMARY OF THE INVENTION

PROBLEMS TO BE SOLVED BY THE INVENTION

An object of the present disclosure is to provide an information processing device, an autonomous mobile device, a method, and a program that implement reduction of power consumption and processing resources by controlling processing rate of recognition processing and sensing rates of various sensors necessary for the autonomous mobile device.

In one embodiment of the present disclosure, for example, in the autonomous mobile device, in a state where it is determined that the device itself is unlikely to hit an obstacle (a stationary state, linear movement state, or the like), the sensing rates of the sensors and the processing rate of the recognition processing are decreased, whereby an unnecessary processing load is reduced. On the other hand, in a situation where it is determined that the device is highly likely to hit an obstacle (when turning a curve, approaching an obstacle, or the like), the processing rate is increased, whereby a collision is avoided. These processing rate controls are sequentially executed on the basis of, for example, observed situations, whereby power consumption and processing costs are reduced, and safe autonomous mobility is implemented.

SOLUTIONS TO PROBLEMS

A first aspect of the present disclosure is
an information processing device including:

> a sensor information analysis unit that generates sensor analysis information by inputting output information from a sensor;
> an action plan determination unit that generates an action plan by inputting the sensor analysis information;
> a sensor rate calculation unit that calculates an optimal sensor rate of the sensor on the basis of at least one of the sensor analysis information or the action plan information; and
> a sensor control unit that adjusts an output from the sensor to the optimal sensor rate.

Moreover, a second aspect of the present disclosure is
an autonomous mobile device including:

> a sensor;
> a sensor information analysis unit that generates sensor analysis information by inputting output information from the sensor;
> an action plan determination unit that generates an action plan by inputting the sensor analysis information;
> a drive control unit that executes drive control according to the action plan;
> a drive unit that drives an autonomous mobile device in accordance with control of the drive control unit;
> a sensor rate calculation unit that calculates an optimal sensor rate of the sensor on the basis of at least one of the sensor analysis information or the action plan information; and
> a sensor control unit that adjusts an output from the sensor to the optimal sensor rate.

Moreover, a third aspect of the present disclosure is
an information processing method executed in an information processing device, the information processing method including:

> a sensor information analysis step in which a sensor information analysis unit generates sensor analysis information by inputting output information from a sensor;
> an action plan determination step in which an action plan determination unit generates an action plan by inputting the sensor analysis information;
> a sensor rate calculation step in which a sensor rate calculation unit calculates an optimal sensor rate of the sensor on the basis of at least one of the sensor analysis information or the action plan information; and
> a sensor rate adjustment step in which a sensor control unit adjusts an output from the sensor to the optimal sensor rate.

Moreover, a fourth aspect of the present disclosure is
an autonomous mobile control method executed in an autonomous mobile device, the autonomous mobile control method including:

> a sensor information analysis step in which a sensor information analysis unit generates sensor analysis information by inputting output information from a sensor;
> an action plan determination step in which an action plan determination unit generates an action plan by inputting the sensor analysis information;
> a drive control step in which a drive control unit executes drive control according to the action plan;
> a step in which a drive unit drives the autonomous mobile device in accordance with control of the drive control unit;
> a sensor rate calculation step in which a sensor rate calculation unit calculates an optimal sensor rate of the sensor on the basis of at least one of the sensor analysis information or the action plan information; and
> a sensor rate adjustment step in which a sensor control unit adjusts an output from the sensor to the optimal sensor rate.

Moreover, a fifth aspect of the present disclosure is
a program that causes an information processing device to execute information processing, the information processing including:

a sensor information analysis step in which a sensor information analysis unit generates sensor analysis information by inputting output information from a sensor;
an action plan determination step in which an action plan determination unit generates an action plan by inputting the sensor analysis information;
a sensor rate calculation step in which a sensor rate calculation unit calculates an optimal sensor rate of the sensor on the basis of at least one of the sensor analysis information or the action plan information; and
a sensor rate adjustment step in which a sensor control unit adjusts an output from the sensor to the optimal sensor rate.

Moreover, a sixth aspect of the present disclosure is:
a program that causes an autonomous mobile device to execute autonomous mobile control processing, the autonomous mobile control processing including:

a sensor information analysis step in which a sensor information analysis unit generates sensor analysis information by inputting output information from a sensor;
an action plan determination step in which an action plan determination unit generates an action plan by inputting the sensor analysis information;
a drive control step in which a drive control unit executes drive control according to the action plan;
a step in which a drive unit drives the autonomous mobile device in accordance with control of the drive control unit;
a sensor rate calculation step in which a sensor rate calculation unit calculates an optimal sensor rate of the sensor on the basis of at least one of the sensor analysis information or the action plan information; and
a sensor rate adjustment step in which a sensor control unit adjusts an output from the sensor to the optimal sensor rate.

Note that, the program of the present disclosure is, for example, a program that can be provided by a communication medium or a storage medium provided in a computer readable form to a computer system or an information processing device that can execute various program codes. By providing such a program in a computer readable form, processing is implemented according to the program on the information processing device or the computer system.

Still other objects, features and advantages of the present disclosure will become apparent from the detailed description based on embodiments of the present disclosure and attached drawings to be described later. Note that, in this specification, the term "system" refers to a logical group configuration of a plurality of devices, and is not limited to a system in which the devices of respective configurations are in the same housing.

EFFECTS OF THE INVENTION

According to a configuration of an embodiment of the present disclosure, an autonomous mobile device is implemented that adjusts a sensor rate according to a situation, and enables both reduction of power consumption and processing resources, and safe traveling.

Specifically, for example, the autonomous mobile device includes: a sensor; a sensor information analysis unit that generates sensor analysis information by inputting output information from the sensor; an action plan determination unit that generates an action plan by inputting the sensor analysis information; a sensor rate calculation unit that calculates an optimal sensor rate of the sensor on the basis of at least one of the sensor analysis information or the action plan information; and a sensor control unit that adjusts either a sensing rate of the sensor or an output rate of sensor output information to the optimal sensor rate.

With this configuration, the autonomous mobile device is implemented that adjusts the sensor rate according to the situation, and enables both reduction of power consumption and processing resources, and safe traveling.

Note that, the advantageous effects described in this specification are merely examples, and the advantageous effects of the present technology are not limited to them and may include additional effects.

BRIEF DESCRIPTION OF DRAWINGS

Fig. 1 is a diagram illustrating a configuration example of an autonomous mobile device.

Fig. 2 is a diagram illustrating information for sensor rate calculation, evaluation items, and sensor rate calculation modes.

Fig. 3 is a diagram illustrating information for sensor rate calculation, evaluation items, and sensor rate calculation modes.

Fig. 4 is a diagram illustrating a sensor rate calculation mode based on one evaluation item.

Fig. 5 is a diagram illustrating a calculation processing example of a final sensor rate decrease allowable index $\alpha$.

Fig. 6 is a diagram illustrating an example of a correspondence relationship between a sensor rate decrease allowable index $\alpha$ and a sensor rate R.

Fig. 7 is a diagram illustrating an example in a case where traveling is performed by simply decreasing a sensor rate to reduce power consumption in a conventional autonomous traveling example to which processing of the present disclosure is not applied.

Fig. 8 is a diagram illustrating an autonomous traveling example to which the processing of the present disclosure is applied.

Fig. 9 is a flowchart illustrating a processing sequence of sensor rate calculation processing executed by a sensor rate calculation unit.

Fig. 10 is a diagram illustrating a configuration example of the autonomous mobile device.

Fig. 11 is a diagram illustrating a hardware configuration example of a data processing unit of the autonomous mobile device.

MODE FOR CARRYING OUT THE INVENTION

Hereinafter, with reference to the drawings, details will be described of an information processing device, an autonomous mobile device, a method, and a program of the present disclosure. Note that, the description will be given in accordance with the following items.

1. Configuration example of information processing device and autonomous mobile device
2. Specific example of sensor rate calculation processing by sensor rate calculation unit
3. Other embodiments
4. Comparison between conventional autonomous traveling example and an autonomous traveling example to which processing of present disclosure is applied
5. Processing sequence of sensor rate calculation unit
6. Configuration example of information processing device
7. Summary of configuration of present disclosure

[1. Configuration example of information processing device and autonomous mobile device]

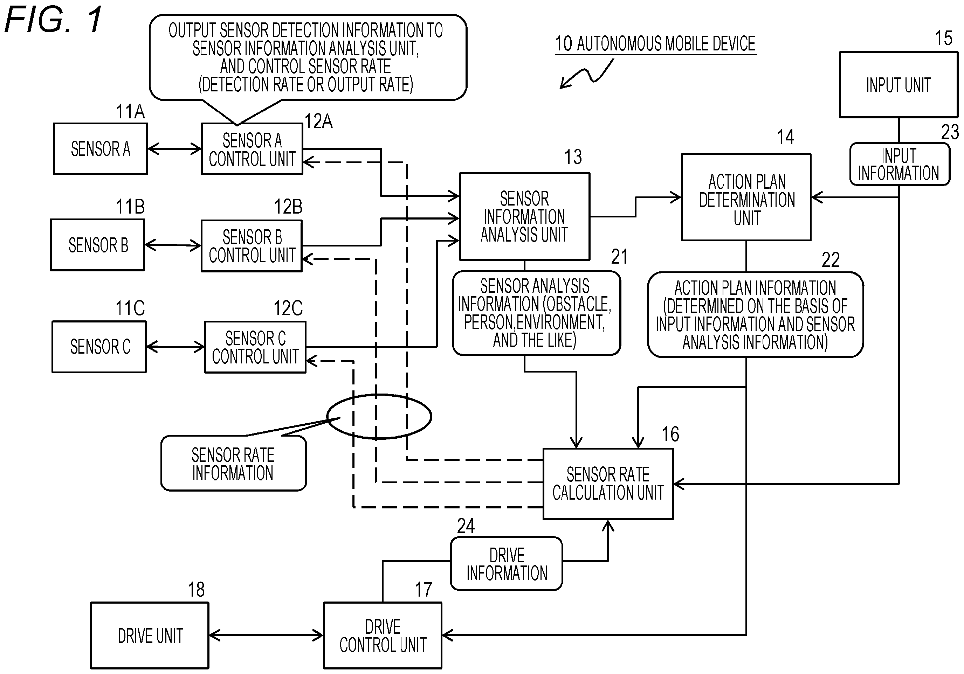

First, a configuration example will be described of the information processing device and the autonomous mobile device of the present disclosure with reference to Fig. 1.

The information processing device according to the present disclosure is mounted on the autonomous mobile device, for example, a car, a robot, or the like, and performs movement control thereof. The autonomous mobile device includes an automatic driving vehicle that runs, a robot that walks, and the like while avoiding obstacles by acquiring various types of sensor information from, for example, a camera, a distance sensor, and the like, and using the acquired sensor information.

As illustrated in Fig. 1, an autonomous mobile device 10 includes sensors 11, sensor control units 12, a sensor information analysis unit 13, an action plan determination unit 14, an input unit 15, a sensor rate calculation unit 16, a drive control unit 17, and a drive unit 18.

A sensor A 11A, a sensor B 11B, and a sensor C 11C include various sensors, for example, a LiDAR, a camera, a distance sensor, and the like.

Note that, Fig. 1 illustrates a configuration example having three sensors, but this is an example. The number of sensors is arbitrary, and various settings are possible.

Furthermore, the numbers of LiDARs, cameras, distance sensors, and the like each are not limited to one, and a plurality of sensors of the same type may be used, such as for front, for rear, and for left and right sides.

Note that, Light Detection and Ranging, or Laser Imaging Detection and Ranging (LiDAR) is a device that acquires a surrounding situation by using pulsed laser light, and acquires surrounding information, for example, a pedestrian, an oncoming vehicle, a sidewalk, an obstacle, or the like.

Sensor control units 12A to 12C respectively control sensing rates or output rates of sensor information of the sensor A 11A to sensor C 11C individually associated therewith.

Furthermore, the sensor A control unit 12A, sensor B control unit 12B, and sensor C control unit 12C have roles of inputting outputs of the respective sensor A 11A, sensor B 11B, and sensor C 11C, and transmitting data to a subsequent processing unit. Furthermore, sensor rate information is input from the sensor rate calculation unit 16, and the sensing rates or the output rates of the sensor information of the sensor A 11A to sensor C 11C are controlled in accordance with the input rate information.

Pieces of sensor information detected by the sensor A 11A to sensor C 11C are respectively acquired by the sensor A control unit 12A to sensor C control unit 12C, and output to the sensor information analysis unit 13.

The sensor information analysis unit 13 analyzes the pieces of sensor information output from the sensor control units 12, and grasps surrounding situation of the autonomous mobile device 10.

For example, the sensor information analysis unit 13 performs obstacle detection, moving object detection, person detection, and the like around the autonomous mobile device 10.

Detection information of the sensor information analysis unit 13 is output to the action plan unit 14 and the sensor rate calculation unit 16.

The action plan unit 14 makes a movement plan of the autonomous mobile device 10 on the basis of the surrounding information of the autonomous mobile device 10 detected by the sensor information analysis unit 13 in the previous stage, and input information input from the input unit 15.

The input unit 15 is, for example, a car navigation system, and in the case of movement to a target point set in advance by the car navigation system, a movement route (path) is generated through which the autonomous mobile device 10 reaches the destination while avoiding an obstacle and the like detected by the sensor information analysis unit 13.

Furthermore, for example, in a case where the autonomous mobile device 10 is set to follow a specific vehicle or person, a path is generated through which the autonomous mobile device 10 moves toward a target to be followed detected by the sensor information analysis unit 13 in the previous stage.

The sensor rate calculation unit 16 calculates an optimal sensor rate on the basis of various types of information. That is, optimal values are calculated of the sensing rates or the output rates of the sensor information of the sensor A 11A to sensor C 11C, and the calculated sensor rate information is output to the sensor A control unit 12A to sensor C control unit 12C.

Note that, the sensor rate is either the sensing rate of the sensor or the output rate of the sensor information acquired by the sensor.

The sensor A control unit 12A to sensor C control unit 12C control the sensing rates or the output rates of the sensor information of the sensor A 11A to sensor C 11C in accordance with the sensor rate information input from the sensor rate calculation unit 16.

Details and a specific example will be described later of sensor rate calculation processing in the sensor rate calculation unit 16.

The drive control unit 17 controls the drive unit 18 to perform traveling and walking according to the movement route (path) generated by the action plan unit 14.

The drive unit 18 includes, for example, a motor for driving a traveling unit (tire, robot's leg), an accelerator, a brake, a movement direction control mechanism (steering), and the like.

[2. Specific example of sensor rate calculation processing by sensor rate calculation unit]

Next, a specific example will be described of the sensor rate calculation processing of the sensor rate calculation unit 16.

The sensor rate calculation unit 16 calculates the optimal sensor rate using the following pieces of information.

    (a) Sensor analysis information 21 input from the sensor information analysis unit 13,
    (b) Action plan information 22 input from the action plan determination unit 14,
    (c) Input information 23 input from the input unit 15,
    (d) Drive information 24 input from the drive control unit 17

The sensor rate calculation unit 16 calculates the optimal sensor rate using the pieces of information described above.

The information of (a) the sensor analysis information 21 input from the sensor information analysis unit 13 is, for example, surrounding observation information of the autonomous mobile device 10, and is information about an obstacle or the like, such as a person, a vehicle, a guardrail, or a wall.

The sensor rate calculation unit 16 determines whether or not there is a high possibility of contact with an obstacle on the basis of the surrounding observation information, and calculates the optimal sensor rate on the basis of the determination result.

For example, in a case where the possibility of contact with an obstacle is high, control is performed of increasing the sensor rate.

The information of (b) the action plan information 22 input from the action plan determination unit 14 includes the input information of the input unit 15, movement route (path) information determined on the basis of the sensor analysis information, timing of start and stop of movement, and the like.

For example, at the start of movement, the sensor rate calculation unit 16 performs control of setting the sensor rate high for self-position confirmation processing of the autonomous mobile device 10 and the like.

The information of (c) the input information 23 input from the input unit 15 is, for example, preset information set by the car navigation system, specifically, route information, environment information of a route, or the like. The environment information includes, for example, information (environment map information) such as an intersection position on the route, and a road curve situation.

For example, in a case where the autonomous mobile device 10 is at a position such as an intersection position, or a curve, the sensor rate calculation unit 16 performs control of setting the sensor rate high to avoid danger.

The information of (d) the drive information 24 input from the drive control unit 17 is drive information such as a traveling direction and traveling speed of the autonomous mobile device 10.

For example, in a case where the autonomous mobile device 10 is traveling at a high speed or switching the traveling direction, the sensor rate calculation unit 16 performs control of setting the sensor rate high to avoid danger.

As described above, the sensor rate calculation unit 16 complexly calculates the optimal sensor rate by using the action plan, observation information, prior knowledge, and the like of the autonomous mobile device 10.

That is, the sensor rate calculation unit 16 calculates the optimal values of the sensing rates or the output rates of the sensor information of the sensor A 11A to sensor C 11C by using the pieces of information of

(a) the sensor analysis information 21 input from the sensor information analysis unit 13,
(b) the action plan information 22 input from the action plan determination unit 14,
(c) the input information 23 input from the input unit 15, and
(d) the drive information 24 input from the drive control unit 17.

Various methods can be applied to the sensor rate calculation method using the pieces of information (a) to (d) described above, and for example, there is a method in which scoring is individually performed of a degree (sensor rate decrease allowable index $\alpha$) to which the sensor rate is allowed to be decreased from each of the pieces of information (a) to (d) described above, the value is evaluated, and the optimal rate is calculated. A specific example will be described later.

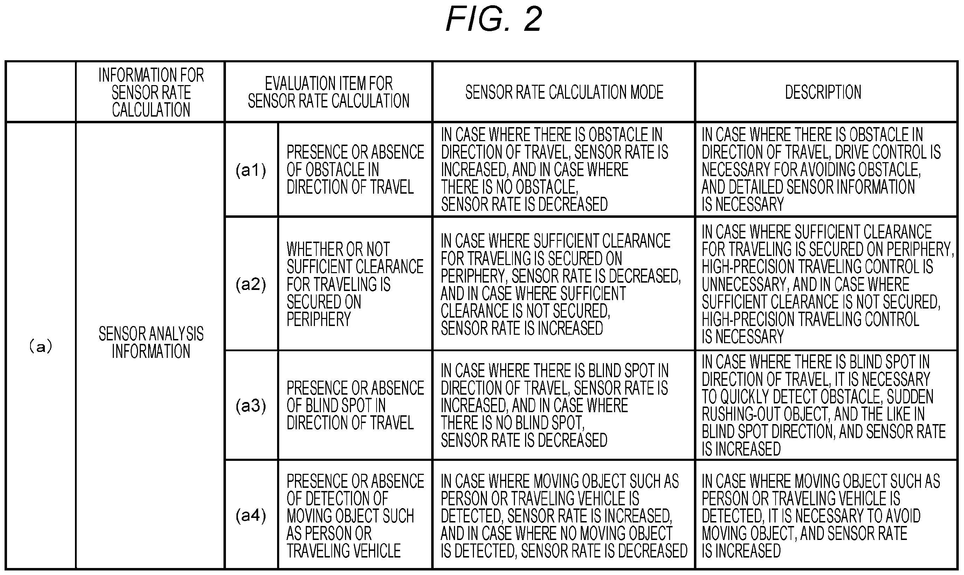

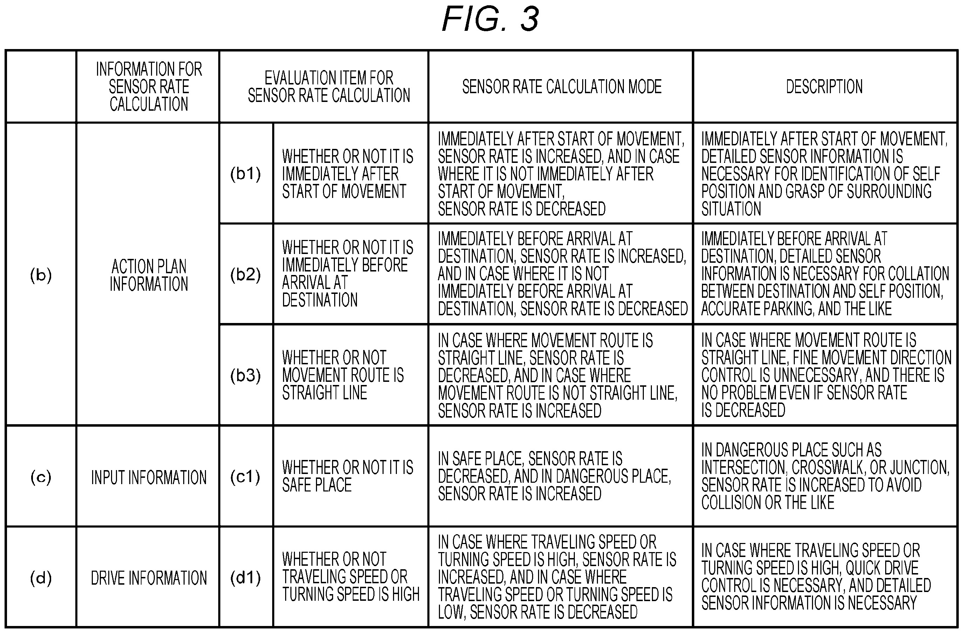

A specific control example will be described of the sensor rate according to contents of the pieces of information (a) to (d) described above with reference to Figs. 2 and 3.

The examples illustrated in Figs. 2 and 3 explain what sensor rate control is executed in a case where the sensor rate calculation unit 16 acquires one piece of information constituting the pieces of information (a) to (d) described above.

Actually, the sensor rate calculation unit 16 calculates the optimal value of the sensor rate on the basis of a complex determination by using a plurality of pieces of information of the pieces of information (a) to (d) described above.

Fig. 2 is a diagram illustrating a sensor rate control example in a case where the sensor rate calculation unit 16 acquires

(a) the sensor analysis information 21 input from the sensor information analysis unit 13.

The sensor rate calculation unit 16 evaluates the input information in accordance with a predefined evaluation item corresponding to each of the pieces of input information, and determines a control mode of the sensor rate in accordance with the evaluation result.

The evaluation items corresponding to "(a) the sensor analysis information 21 input from the sensor information analysis unit 13" are the following four evaluation items as illustrated in [evaluation item for sensor rate calculation] in Fig. 2.

(a1) Presence or absence of an obstacle in a direction of travel
(a2) Whether or not sufficient clearance for traveling is secured on the periphery
(a3) Presence or absence of a blind spot in the direction of travel
(a4) Presence or absence of detection of a moving object such as a person or a traveling vehicle

The sensor rate calculation unit 16 evaluates the sensor analysis information 21 input from the sensor information analysis unit 13 for each of the evaluation items (a1) to (a4) described above, for example, and determines a control mode of the sensor rate in accordance with the evaluation result.

Specifically, the sensor rate calculation processing is performed as indicated in [sensor rate calculation mode] indicated in Fig. 2.

Sensor rate control processing using the evaluation result of the evaluation item "(a1) presence or absence of an obstacle in a direction of travel" is as follows.

In a case where there is an obstacle in the direction of travel, the sensor rate is increased, in a case where there is no obstacle, the sensor rate is decreased.

This is because in the case where there is the obstacle in the direction of travel, drive control is necessary for avoiding the obstacle, and detailed sensor information is necessary.

Furthermore, sensor rate control processing using the evaluation result of the evaluation item "(a2) whether or not sufficient clearance for traveling is secured on the periphery" is as follows.

In a case where sufficient clearance for traveling is secured on the periphery, the sensor rate is decreased, and in a case where sufficient clearance is not secured, the sensor rate is increased.

This is because in the case where sufficient clearance for traveling is secured on the periphery, high-precision traveling control is unnecessary, and in the case where sufficient clearance is not secured, high-precision traveling control is necessary.

Furthermore, sensor rate control processing using the evaluation result of the evaluation item "(a3) presence or absence of a blind spot in the direction of travel" is as follows.

In a case where there is a blind spot in the direction of travel, the sensor rate is increased, and in a case where there is no blind spot, the sensor rate is decreased.

This is because in the case where there is the blind spot in the direction of travel, it is necessary to quickly detect an obstacle, a sudden rushing-out object, and the like in the blind spot direction, and it is necessary to increase the sensor rate.

Moreover, sensor rate control processing using the evaluation result of the evaluation item "(a4) presence or absence of detection of a moving object such as a person or a traveling vehicle" is as follows.

In a case where a moving object such as a person or a traveling vehicle is detected, the sensor rate is increased, and in a case where no moving object is detected, the sensor rate is decreased.

This is because in the case where the moving object such as the person or the traveling vehicle is detected, it is necessary to avoid the moving object, and it is necessary to increase the sensor rate.

Fig. 3 is a diagram illustrating a sensor rate control example in a case where the sensor rate calculation unit 16 acquires

(b) the action plan information 22 input from the action plan determination unit 14,
(c) the input information 23 input from the input unit 15, and
(d) the drive information 24 input from the drive control unit 17.

The sensor rate calculation unit 16 evaluates the input information in accordance with a predefined evaluation item corresponding to each of the pieces of input information also for these pieces of input information, and determines a control mode of the sensor rate in accordance with the evaluation result.

The evaluation items corresponding to "(b) the action plan information 22 input from the action plan determination unit 14" are the following three evaluation items as illustrated in [evaluation item for sensor rate calculation] in Fig. 3.

(b1) Whether or not it is immediately after a start of movement
(b2) Whether or not it is immediately before arrival at a destination
(b3) Whether or not a movement route is a straight line

The sensor rate calculation unit 16 evaluates the action plan information 22 input from the action plan determination unit 14 for each of the evaluation items (b1) to (b3) described above, for example, and determines a control mode of the sensor rate in accordance with the evaluation result.

Specifically, the sensor rate calculation processing is performed as indicated in [sensor rate calculation mode] indicated in Fig. 3.

Sensor rate control processing using the evaluation result of the evaluation item "(b1) whether or not it is immediately after a start of movement" is as follows.

Immediately after a start of movement, the sensor rate is increased, and in a case where it is not immediately after the start of movement, the sensor rate is decreased.

This is because immediately after the start of movement, detailed sensor information is necessary for identification of the self position and grasp of the surrounding situation.

Furthermore, sensor rate control processing using the evaluation result of the evaluation item "(b2) whether or not it is immediately before arrival at a destination" is as follows.

Immediately before arrival at a destination, the sensor rate is increased, and in a case where it is not immediately before the arrival at the destination, the sensor rate is decreased.

This is because before the arrival at the destination, detailed sensor information is necessary for collation between the destination and the self position, accurate parking, and the like.

Furthermore, sensor rate control processing using the evaluation result of the evaluation item "(b3) whether or not a movement route is a straight line" is as follows.

In a case where a movement route is a straight line, the sensor rate is decreased, and in a case where the movement route is not the straight line, the sensor rate is increased.

This is because in the case where the movement route is the straight line, fine movement direction control is unnecessary, and there is no problem even if the sensor rate is decreased.

Next, processing will be described to which (c) the input information 23 input from the input unit 15 is applied.

The evaluation item corresponding to "(c) the input information 23 input from the input unit 15" is the following one evaluation item as indicated in [evaluation item for sensor rate calculation] in Fig. 3.

(c1) Whether or not it is a safe place

The sensor rate calculation unit 16 evaluates the input information 23 input from the input unit 15 for the evaluation item (c1) described above, for example, and determines a control mode of the sensor rate in accordance with the evaluation result.

Specifically, the sensor rate calculation processing is performed as indicated in [sensor rate calculation mode] indicated in Fig. 3.

Sensor rate control processing using the evaluation result of the evaluation item "(c1) whether or not it is a safe place" is as follows.

In a safe place, the sensor rate is decreased, and in a dangerous place, the sensor rate is increased.

This is because in the dangerous place such as an intersection, a crosswalk, or a junction, it is necessary to increase the sensor rate to avoid a collision or the like.

Next, processing will be described to which (d) the drive information 24 input from the drive control unit 17 is applied.

The evaluation item corresponding to "(d) the drive information 24 input from the drive control unit 17" is the following one evaluation item as indicated in [evaluation item for sensor rate calculation] in Fig. 3.

(d1) Whether or not traveling speed or turning speed is high

The sensor rate calculation unit 16 evaluates the drive information 24 input from the drive control unit 17 for the evaluation item (d1) described above, for example, and determines a control mode of the sensor rate in accordance with the evaluation result.

Specifically, the sensor rate calculation processing is performed as indicated in [sensor rate calculation mode] indicated in Fig. 3.

Sensor rate control processing using the evaluation result of the evaluation item "(d1) whether or not traveling speed or turning speed is high" is as follows.

In a case where traveling speed or turning speed is high, the sensor rate is increased, and in a case where traveling speed or turning speed is low, the sensor rate is decreased.

This is because in the case where the traveling speed or the turning speed is high, quick drive control is necessary, and detailed sensor information is necessary.

In the above, with reference to Figs. 2 and 3, individual sensor rate control processing examples have been described according to the evaluation results of the respective evaluation items associated with the following pieces of input information input by the sensor rate calculation unit 16.

(a) The sensor analysis information 21 input from the sensor information analysis unit 13
(b) The action plan information 22 input from the action plan determination unit 14
(c) The input information 23 input from the input unit 15
(d) The drive information 24 input from the drive control unit 17

The examples illustrated in Figs. 2 and 3 explain what sensor rate control is executed in a case where the sensor rate calculation unit 16 acquires one piece of information constituting the pieces of information (a) to (d) described above.

However, as described above, actually, the sensor rate calculation unit 16 calculates the optimal value of the sensor rate on the basis of a complex determination by using a plurality of pieces of information of the pieces of information (a) to (d) described above.

In a case where the sensor rate optimal value is calculated by using the plurality of pieces of information, the sensor rate calculation unit 16 calculates, for example, the "sensor rate decrease allowable index $\alpha$" indicating the degree to which the sensor rate is allowed to be decreased from each of the evaluation results of the evaluation items corresponding to the pieces of information (a) to (d) described above, and individually performs scoring of the calculation result, and calculates the optimal value of a final sensor rate by using a plurality of scored data.

As illustrated in Figs. 2 and 3, there are many evaluation items for sensor rate control ((a1) to (d1)); however, for the following three evaluation items selected from these evaluation items, calculation processing examples will be described of a specific "sensor rate decrease allowable index $\alpha$".

(a1) Presence or absence of an obstacle in a direction of travel
(b3) Whether or not a movement route is a straight line
(c1) Whether or not it is a safe place

((Index $\alpha$ calculation example 1) Calculation processing example of the "sensor rate decrease allowable index $\alpha$" corresponding to the evaluation item "(a1) presence or absence of an obstacle in a direction of travel")

First, a calculation processing example will be described of the "sensor rate decrease allowable index $\alpha$" corresponding to the evaluation item "(a1) presence or absence of an obstacle in a direction of travel".

As described above with reference to Fig. 2, the following four evaluation items are associated with input information to the sensor rate calculation unit 16, that is,

"(a) the sensor analysis information 21 input from the sensor information analysis unit 13".
(a1) Presence or absence of an obstacle in a direction of travel
(a2) Whether or not sufficient clearance for traveling is secured on the periphery
(a3) Presence or absence of a blind spot in the direction of travel
(a4) Presence or absence of detection of a moving object such as a person or a traveling vehicle

The "sensor rate decrease allowable index $\alpha$" corresponding to one evaluation item "(a1) presence or absence of an obstacle in a direction of travel" of these evaluation items
is defined as
$\alpha 1$.

The sensor rate calculation unit 16
calculates a "sensor rate decrease allowable index $\alpha 1$" indicating the degree to which the sensor rate is allowed to be decreased on the basis of the evaluation result of the evaluation item "(a1) presence or absence of an obstacle in a direction of travel".

The sensor rate calculation unit 16
predefines a possible value of the "sensor rate decrease allowable index $\alpha 1$" as
$0 \leq \alpha 1 \leq \alpha max$.

Note that, a value of $\alpha max$ is a predefined value, and the value of $\alpha max$ may be a common value for each evaluation item, or may be a value different for each evaluation item.

As the evaluation result of the evaluation item "(a1) presence or absence of an obstacle in a direction of travel", in a case where an evaluation result is obtained that "there is no obstacle in the direction of travel", it is determined that the sensor rate is allowed to be decreased to the maximum, and
the index is set as
$\alpha 1 = \alpha max$.

On the other hand, as the evaluation result of the evaluation item "(a1) presence or absence of an obstacle in a direction of travel",
in a case where an evaluation result is obtained that "there is an obstacle at a separation distance position x in the direction of travel", the value of $\alpha 1$ is decreased in accordance with the distance x to the obstacle.

As described above, the sensor rate calculation unit 16,
for one evaluation item "(a1) presence or absence of an obstacle in a direction of travel"
corresponding to the input information "(a) the sensor analysis information 21 input from the sensor information analysis unit 13",
in a predefined range of
$0 \leq \alpha 1 \leq \alpha max$,
in a case where "there is no obstacle in the direction of travel, sets the "sensor rate decrease allowable index $\alpha 1$" as $\alpha 1 = \alpha max$, and
in a case where "there is an obstacle at the separation distance position x in the direction of travel", performs processing of decreasing the value of $\alpha 1$ in accordance with the distance x to the obstacle, to calculate the "sensor rate decrease allowable index $\alpha 1$".

((Index $\alpha$ calculation example 2) Calculation processing example of the "sensor rate decrease allowable index $\alpha$" corresponding to the evaluation item "(b3) whether or not a movement route is a straight line")

Next, a calculation processing example will be described of the "sensor rate decrease allowable index α" corresponding to the evaluation item "(b3) whether or not a movement route is a straight line".

The evaluation items corresponding to input information to the sensor rate calculation unit 16, that is,

"(b) the action plan information 22 input from the action plan determination unit 14" are the following three evaluation items as indicated in [evaluation item for sensor rate calculation] in Fig. 3.
(b1) Whether or not it is immediately after a start of movement
(b2) Whether or not it is immediately before arrival at a destination
(b3) Whether or not a movement route is a straight line

The "sensor rate decrease allowable index α" corresponding to one evaluation item "(b3) whether or not a movement route is a straight line" of these evaluation items
is defined as
$\alpha 2$.

The sensor rate calculation unit 16
calculates a "sensor rate decrease allowable index $\alpha 2$" indicating the degree to which the sensor rate is allowed to be decreased on the basis of the evaluation result of the evaluation item "(b3) whether or not a movement route is a straight line".

The sensor rate calculation unit 16 determines whether or not the movement route is a straight line from route information included in the action plan information 22 input from the action plan determination unit 14.

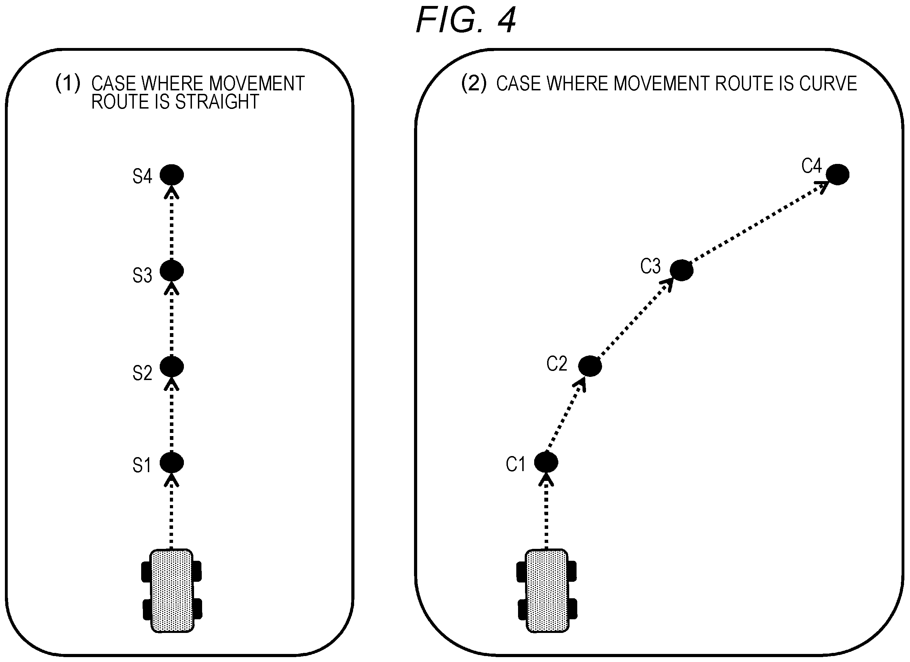

Fig. 4 illustrates examples of the route (path) information included in the action plan information 22 output by the action plan determination unit 14 during traveling straight and during turning.

The route (path) information included in the action plan information 22 output by the action plan determination unit 14 is, for example, data obtained by connecting together the coordinates of points that the autonomous mobile device 10 should follow.

Note that, the action plan information 22 output by the action plan determination unit 14 includes not only such route information but also drive information of the moving device, such as a velocity, angular velocity, and steering angle when the moving device passes through each coordinate point, and these pieces of drive information is output to the drive control unit 17, and traveling according to the action plan is performed.

Fig. 4 illustrates examples of the following two pieces of route information.

(1) A case where the movement route is straight,
(2) A case where the movement route is a curve,

In (1) a case where the movement route is straight in Fig. 4, a value of the angular velocity or the steering angle from S1 to S4 is almost 0 since the device goes straight.

On the other hand, in (2) a case where the movement route is a curve, the device has an angular velocity or a steering angle for turning from C1 to C4.

The sensor rate calculation unit 16
calculates a "sensor rate decrease allowable index $\alpha 2$" indicating the degree to which the sensor rate is allowed to be decreased on the basis of the evaluation result of the evaluation item "(b3) whether or not a movement route is a straight line".

The sensor rate calculation unit 16
predefines a possible value of the "sensor rate decrease allowable index $\alpha 2$" as

$$0 \le \alpha 2 \le \alpha max.$$

Note that, as described above, the value of $\alpha max$ is a predefined value. The value of $\alpha max$ may be a common value for each evaluation item, or may be a value different for each evaluation item.

As described above, the sensor rate control processing using the evaluation result of the evaluation item "(b3) whether or not a movement route is a straight line" is as follows.

In a case where a movement route is a straight line, the sensor rate is decreased, and in a case where the movement route is not the straight line, the sensor rate is increased.

This is because in the case where the movement route is the straight line, fine movement direction control is unnecessary, and there is no problem even if the sensor rate is decreased.

As the evaluation result of the evaluation item "(b3) whether or not a movement route is a straight line",

in a case where the evaluation result is obtained that "the movement path is a straight line" as illustrated in Fig. 4(1), it is determined that the sensor rate is allowed to be decreased to the maximum, and the index is set as

$$\alpha 2 = \alpha max.$$

On the other hand, as the evaluation result of the evaluation item "(b3) whether or not a movement route is a straight line",

in a case where the evaluation result is obtained that "the movement route is not a straight line but a curve" as illustrated in Fig. 4(2), the value of $\alpha 2$ is decreased in accordance with a degree of non-straight line, that is, a size of the curve. That is, as the curve angle increases, the value of $\alpha 2$ is decreased.

Note that, the sensor rate calculation unit 16 may determine the value of $\alpha 2$ in further consideration of information such as a velocity, angular velocity, and steering angle included in the action plan information 22 input from the action plan unit 14.

With such processing, on the basis of the evaluation result of the evaluation item "(b3) whether or not a movement route is a straight line" corresponding to the action plan information 22 input from the action plan unit 14, the sensor rate calculation unit 16 calculates the "sensor rate decrease allowable index $\alpha 2$" within a predefined range, that is,

$$0 \le \alpha 2 \le \alpha max.$$

((Index $\alpha$ calculation example 3) Calculation processing example of the "sensor rate decrease allowable index $\alpha$" corresponding to the evaluation item "(c1) whether or not it is a safe place")

Next, a calculation processing example will be described of the "sensor rate decrease allowable index $\alpha$" corresponding to the evaluation item "(c1) whether or not it is a safe place".

The evaluation item corresponding to input information to the sensor rate calculation unit 16, that is,

"(c) the input information 23 input from the input unit 15" is the following evaluation item as illustrated in [evaluation item for sensor rate calculation] in Fig. 3.
(c1) Whether or not it is a safe place

The "sensor rate decrease allowable index $\alpha$" corresponding to the evaluation item "(c1) whether or not it is a safe place" is defined as

$$\alpha 3.$$

The sensor rate calculation unit 16 calculates a "sensor rate decrease allowable index $\alpha 3$" indicating the degree to which the sensor rate is allowed to be decreased on the basis of the evaluation result of the evaluation item "(c1) whether or not it is a safe place".

The sensor rate calculation unit 16 predefines a possible value of the "sensor rate decrease allowable index $\alpha 3$" as

$$0 \le \alpha 3 \le \alpha max.$$

Note that, as described above, the value of $\alpha max$ is a predefined value. The value of $\alpha max$ may be a common value for each evaluation item, or may be a value different for each evaluation item.

As described above, the sensor rate control processing using the evaluation result of the evaluation item "(c1) whether or not it is a safe place" is as follows.

In a safe place, the sensor rate is decreased, and in a dangerous place, the sensor rate is increased.

This is because in the dangerous place such as an intersection, a crosswalk, or a junction, it is necessary to increase the sensor rate to avoid a collision or the like.

In a case where the current position can be grasped from a car navigation system, GPS, or the like, the sensor rate calculation unit 16 determines the sensor rate depending on the surrounding environment. As a means, environments where the sensor rate should not be decreased are held as a dangerous point list, and in a case where the current position is a dangerous point included in the dangerous point list, it is determined that the sensor rate should not be decreased, and the "sensor rate decrease allowable index $\alpha$" is set to the minimum value ($\alpha3 = 0$).

Note that, points included in the dangerous point list are intersections, crosswalks, lane junctions, school zones, and the like.

On the other hand, in a case where the current position is away from the dangerous point recorded in the dangerous point list, it is determined that the sensor rate can be set low. In this case, for example, the value of the "sensor rate decrease allowable index $\alpha3$" is increased as the separation distance x between the dangerous point and the current position increases.

With such processing, on the basis of the evaluation result of the evaluation item "(c1) whether or not it is a safe place" corresponding to the input information 23 input from the input unit 15, the sensor rate calculation unit 16 calculates the "sensor rate decrease allowable index $\alpha3$"
within a predefined range, that is,

$$0 \leq \alpha3 \leq \alpha max.$$

Such processing is executed for each evaluation item, and the "sensor rate decrease allowable indexes $\alpha1$ to $\alpha n$" are calculated corresponding to respective evaluation items (1 to n).

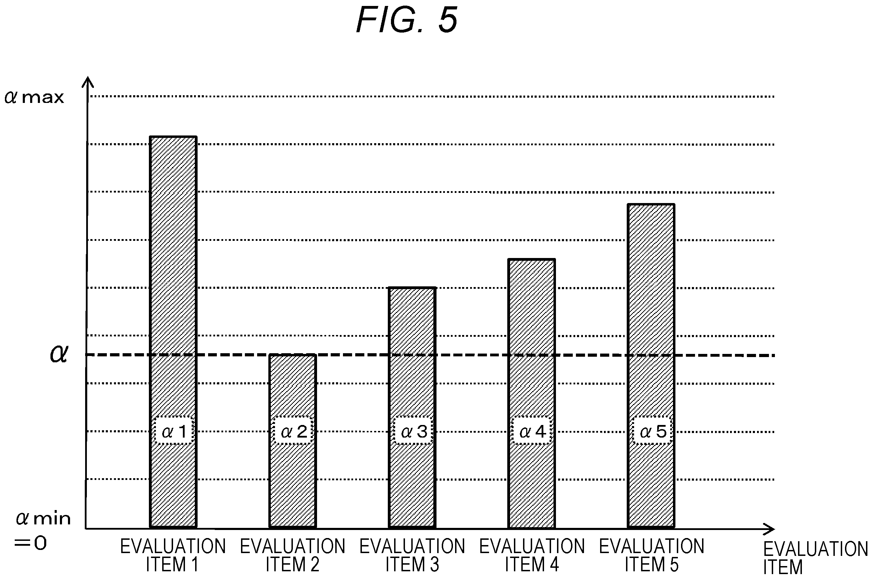

Fig. 5 illustrates an example of the result of calculating the "sensor rate decrease allowable indexes $\alpha1$ to $\alpha n$" corresponding to the respective evaluation items (1 to n).

The example illustrated in Fig. 5 is an example of the result of calculating "sensor rate decrease allowable indexes $\alpha1$ to $\alpha5$" corresponding to respective evaluation items (1 to 5) with the number of evaluation items n = 5.

As illustrated in Fig. 4, the sensor rate calculation unit 16 calculates the "sensor rate decrease allowable indexes $\alpha1$ to $\alpha5$" corresponding to the respective evaluation items (1 to 5).

Next, the sensor rate calculation unit 16 selects an evaluation item having the smallest value, that is, the evaluation item requesting the highest sensor rate, from the "sensor rate decrease allowable indexes $\alpha1$ to $\alpha5$" corresponding to the respective evaluation items.

In the example illustrated in Fig. 5, among the "sensor rate decrease allowable indexes $\alpha1$ to $\alpha5$" corresponding to the five evaluation items, the evaluation item having the smallest value is the sensor rate decrease allowable index $\alpha2$ for the evaluation item 2.

That is, the sensor rate decrease allowable index $\alpha2$ calculated on the basis of the evaluation result of the evaluation item 2 is smaller than any of the calculated sensor rate decrease allowable indexes $\alpha1$, $\alpha3$ to $\alpha5$ based on the evaluation results for other evaluation items.

In this case, the sensor rate calculation unit 16 determines the sensor rate decrease allowable index $\alpha2$ calculated on the basis of the evaluation result of the evaluation item 2 as a final sensor rate decrease allowable index $\alpha$.

The sensor rate calculation unit 16 calculates an optimal sensor rate R in accordance with the following equation 1 using the final sensor rate decrease allowable index $\alpha$ calculated in this way.

[Expression 1]

$$R = R_{min}\left(\frac{\alpha}{\alpha_{max}}\right) + R_{max}\left(1 - \frac{\alpha}{\alpha_{max}}\right) \qquad \text{... (equation 1)}$$

Note that, in the above (equation 1), values of parameters are as follows.

Rmin: allowable minimum value of the sensor rate R,
Rmax: allowable maximum value of the sensor rate R,
That is, the sensor rate R
is set to a value in a range of
Rmin $\leq$ R $\leq$ Rmax.

When a relationship between
the sensor rate R defined by the above (equation 1) and

the final sensor rate decrease allowable index $\alpha$

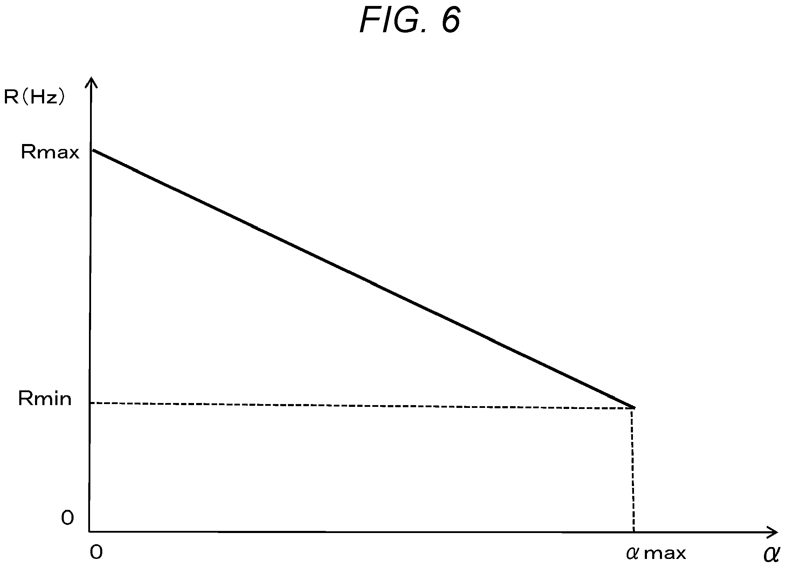

is illustrated in a graph, the relationship illustrated in Fig. 6 is obtained.

Fig. 6 is the graph with the "final sensor rate decrease allowable index $\alpha$" on the horizontal axis and the sensor rate R on the vertical axis.

As can be seen from the graph illustrated in Fig. 6,

in a case where the final sensor rate decrease allowable index is $\alpha = 0$, the sensor rate R is R = Rmax, and

in a case where the final sensor rate decrease allowable index is $\alpha = \alpha$max, the sensor rate R is R = Rmin.

Note that, the correspondence relationship between the sensor rate decrease allowable index $\alpha$ and the sensor rate R illustrated in Fig. 6 is an example, and other correspondence relationships can also be set and used.

As described above, the sensor rate calculation unit 16 complexly calculates the optimal sensor rate by using the action plan, observation information, prior knowledge, and the like of the autonomous mobile device 10.

That is, the sensor rate calculation unit 16

calculates the optimal value of the sensor rate by using the pieces of information of

(a) the sensor analysis information 21 input from the sensor information analysis unit 13,
(b) the action plan information 22 input from the action plan determination unit 14,
(c) the input information 23 input from the input unit 15, and
(d) the drive information 24 input from the drive control unit 17.

As described above, the sensor rate calculation unit 16 calculates the sensor rate decrease allowable index $\alpha$ indicating the degree to which the sensor rate is allowed to be decreased, and calculates the sensor rate R on the basis of the calculated sensor rate decrease allowable index $\alpha$.

Such processing is performed as a result of considering that the processing is guided in the safest direction.

In a case where the sensor rate decrease allowable index is $\alpha = 0$,

the calculated sensor rate R is

R = Rmax.

Furthermore, in a case where it is determined to be in a situation where the sensor rate R should never be decreased, the sensor rate R may be forcibly set to R = Rmax.

Note that, as described with reference to Fig. 1, in most cases, the autonomous mobile device 10 implements a function by integrating a plurality of sensors. Since the possible sensor rate range (Rmin and Rmax described above) varies depending on the sensor, it is necessary to calculate the sensor rate individually. For example, some stereo cameras can produce a rate exceeding 100 Hz, but a general LiDAR has an upper limit of about 30 Hz. Thus, the above-described evaluation and sensor rate calculation processing are applied to each sensor, and the optimal sensor rate for each sensor is determined.

[3. Other embodiments]

Next, other embodiments will be described.

The following embodiments will be described.

(a) Embodiment using vehicle-to-vehicle communication
(b) Setting example of sensor rate control mode

(a) Embodiment using vehicle-to-vehicle communication

In the embodiment described above, one autonomous mobile device controls the sensor rate on the basis of information acquired from its own sensor.

In a case where there are a large number of such autonomous mobile devices, one autonomous mobile device may acquire detection information by a sensor of another autonomous mobile device traveling around the one autonomous mobile device by inter-device communication, and perform control of the sensor rate by using the acquired information.

For example, if sensor information acquired by another preceding device traveling in front of the one autonomous mobile device is used, it is possible to quickly acquire a situation in the far front that cannot be acquired by the sensor of the one autonomous mobile device, and reliable and high-speed sensor rate control processing is possible.

(b) Setting example of sensor rate control mode

In the embodiment described above, the sensor rate calculated by the sensor rate calculation unit may be the sensing rate of the sensor, or may be the sensor output rate output from the sensor to the subsequent sensor information analysis unit.

For example, in a case where it is difficult to directly control the sensor rate of hardware, such as in a case where control response of the sensor takes time, it is possible to achieve reduction of overall power consumption and processing resources of the device by decreasing the processing rate of the subsequent processing unit.

For example, without reducing the sensing rate of each sensor, by thinning out the output from the sensor control unit to the subsequent processing unit so that the optimal sensor rate R calculated in accordance with the above (equation 1) is obtained, it is possible to decrease the processing rates of subsequent processing units, and it is possible to achieve reduction of the power consumption and processing resources.

[4. Comparison between conventional autonomous traveling example and an autonomous traveling example to which processing of present disclosure is applied]

Next, with a specific example, a comparison will be described between a conventional autonomous traveling example and an autonomous traveling example to which processing of the present disclosure is applied.

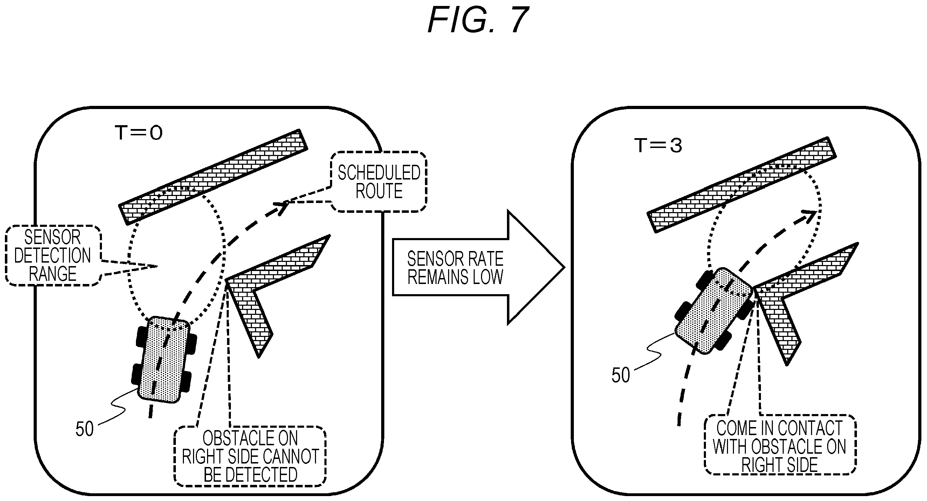

Fig. 7 is a diagram illustrating an example in a case where traveling is performed by simply decreasing the sensor rate to reduce power consumption in the conventional autonomous traveling example to which the processing of the present disclosure is not applied.

It is a diagram illustrating a case where a problem occurs when only the decrease of the sensor rate is simply performed.

An autonomous mobile device 50 illustrated in Fig. 7 is a vehicle provided with a distance sensor such as a time of flight (ToF) camera in front.

The autonomous mobile device 50 makes a right turn.

At time T = 0, a right corner ahead of the autonomous mobile device 50 exists outside a field of view of a camera mounted in front of the autonomous mobile device 50, that is, outside a sensor detection range.

Thus, the corner has not been detected yet at the time T = 0.

Since the sensor rate is decreased to reduce power consumption, it is assumed that input time of next sensor detection information after the time T = 0 is time T = 3.

At the time T = 3 illustrated on the right side of Fig. 7, the next sensor information after the time T = 0 is input.

At the time T = 3, as the autonomous mobile device 50 turns right, a right wall ahead enters the field of view of the camera, that is, the sensor detection range. However, at the time T = 3, the wall appears at a close distance immediately in front of the autonomous mobile device 50.

In this state, even if the autonomous mobile device 50 starts stop control, the autonomous mobile device 50 is highly likely to collide with or come into contact with the wall.

As described above, a problem occurs when only the decrease of the sensor rate is simply performed.

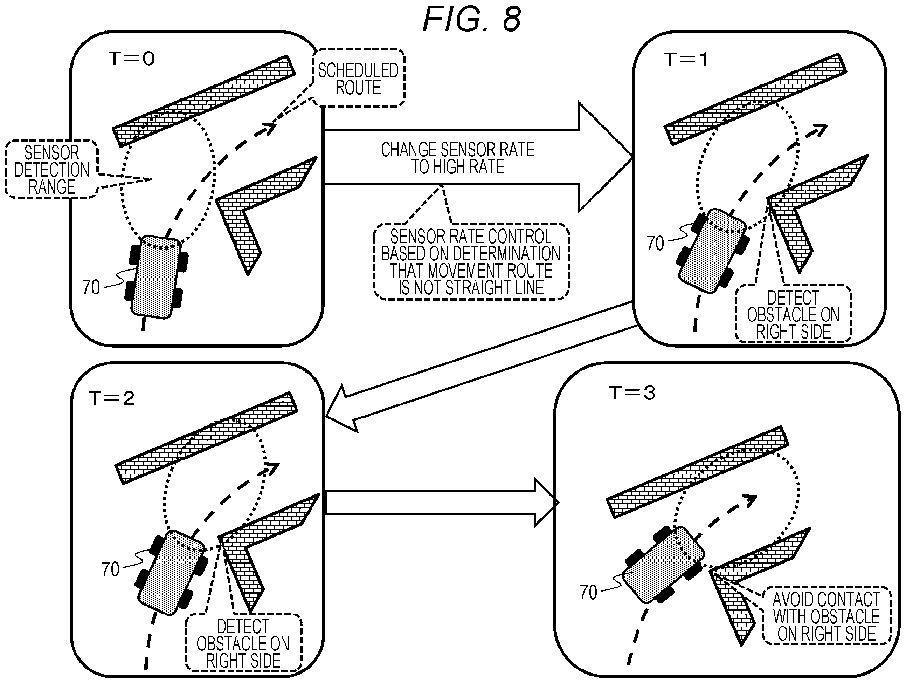

Fig. 8 is a diagram illustrating an autonomous traveling example to which the processing of the present disclosure is applied.

An autonomous mobile device 70 that executes the processing of the present disclosure illustrated in Fig. 8 has the configuration illustrated in Fig. 1.

That is, the sensor rate calculation unit 16 calculates the optimal sensor rate by using the following pieces of information.

(a) The sensor analysis information 21 input from the sensor information analysis unit 13
(b) The action plan information 22 input from the action plan determination unit 14
(c) The input information 23 input from the input unit 15
(d) The drive information 24 input from the drive control unit 17

The sensor rate calculation unit 16 calculates the optimal sensor rate by using the pieces of information described above, and the sensor rate is sequentially changed.

The autonomous mobile device 70 illustrated in Fig. 8 is also a vehicle provided with a distance sensor such as the time of flight (ToF) camera in front.

The autonomous mobile device 70 makes a right turn.

The situation at the time T = 0 is a situation similar to that in Fig. 7 described above.

That is, a right corner ahead of the autonomous mobile device 70 exists outside a field of view of a camera mounted in front of the autonomous mobile device 70, that is, outside a sensor detection range.

Thus, the corner has not been detected yet at the time T = 0.

Also in this processing, the sensor rate is decreased at this time point to reduce power consumption.

However, in a case where the processing of the present disclosure is applied, for example, on the basis of "(b) the action plan information 22 input from the action plan determination unit 14" or "(c) the input information 23 input from the input unit 15", at the time T = 0, processing is executed of changing the sensor rate to a high rate.

For example, on the basis of the following information input at the time T = 0, that is,

the input information of (b) the action plan information 22 input from the action plan determination unit 14,

it is possible to evaluate whether or not the movement route after the time T = 0 is a straight line. This is the evaluation for the evaluation item (b3) described above with reference to Fig. 3.

The sensor rate calculation unit 16 evaluates that the movement route is not a straight line as the evaluation result of the evaluation item, generates sensor rate information for increasing the sensor rate on the basis of the evaluation result, and outputs the sensor rate information to the sensor control units 12. The sensor control units 12 perform processing of increasing the sensor rates on the basis of the sensor rate information.

As a result, after the time T = 0, sensor information with a short sensing interval at T = 1, 2, 3, ..., is input from the sensors 11 to the sensor information analysis unit 13 via the sensor control units 12.

As illustrated in Fig. 8, the sensor detection range (for example, the camera imaging range) at the time T = 1 includes a part of the right wall ahead of the autonomous mobile device 70.

That is, at the time T = 1, the sensor information analysis unit 13 of the autonomous mobile device 70 can detect that there is a wall on the right front, and can input the detection result to the action plan determination unit 14.

As a result, the action plan determination unit 14 can set a traveling route to avoid the right wall ahead, and outputs action plan information according to the set traveling route to the drive control unit 17.

The drive control unit 17 performs direction control (steering control) of the autonomous mobile device 70 to perform traveling that avoids the right wall ahead.

Although the time T = 2 is next sensor detection information input timing, even at this time point, the sensor detection range (for example, the camera imaging range) includes a part of the right wall ahead of the autonomous mobile device 70, and the traveling route can be further changed and corrected even at the time T = 2.

That is, the sensor information analysis unit 13 inputs that there is the wall on the right front to the action plan determination unit 14, and the action plan determination unit 14 sets the traveling route to avoid the right wall ahead, and outputs the action plan information according to the set traveling route to the drive control unit 17.

The drive control unit 17 performs direction control (steering control) of the autonomous mobile device 70 to perform traveling that avoids the right wall ahead.

As described above, in the case where the processing of the present disclosure is applied, the sensor rate is changed immediately before the autonomous mobile device approaches a dangerous position, and traveling control using high-rate sensing information is implemented. As a result, at the time T = 3 illustrated in Fig. 8, the autonomous mobile device 70 can turn right without coming into contact with the right wall ahead, and safe traveling is achieved.

As described above, by applying the processing of the present disclosure, it is possible to increase the sensor rate only when necessary, and it is possible to achieve both safe traveling and reduction of power consumption and processing resources.

[5. Processing sequence of sensor rate calculation unit]

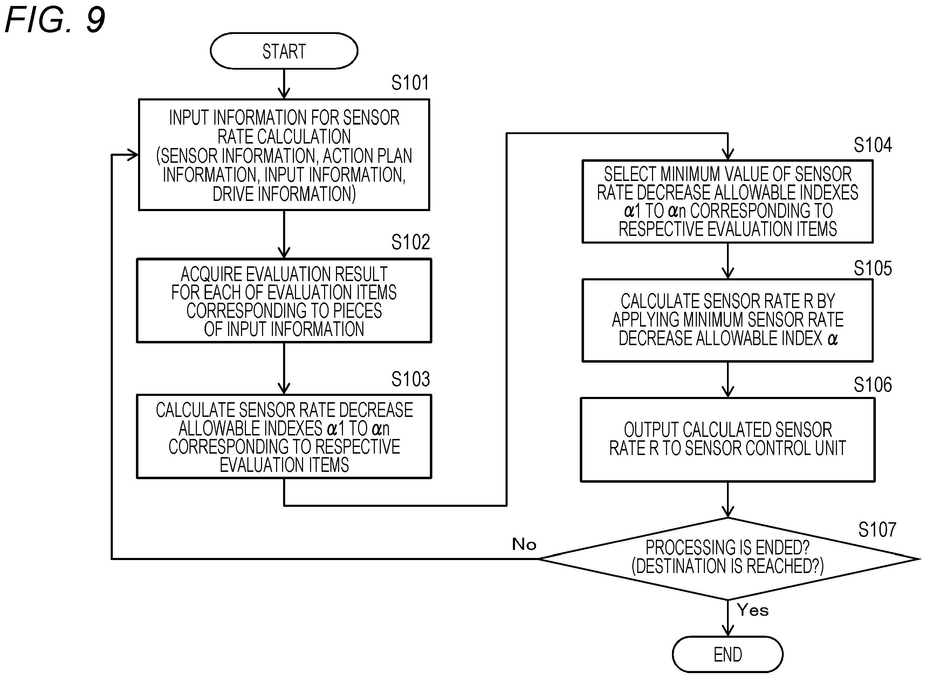

Next, a processing sequence will be described of sensor rate calculation processing executed by the sensor rate calculation unit 16 with reference to the flowchart illustrated in Fig. 9.

The flowchart illustrated in Fig. 9 is a flowchart illustrating the processing sequence of the sensor rate calculation processing executed by the sensor rate calculation unit 16.

The processing according to the flowchart can be executed, for example, in accordance with a program stored in a storage unit of the autonomous mobile device.

The sensor rate calculation unit 16 can be configured by, for example, a processor (CPU) having a program execution function, and processing according to the flow illustrated in Fig. 9 is performed by execution of the program.

Hereinafter, processing will be described of each step of the flowchart.

(Step S101)

First, in step S101, the sensor rate calculation unit 16 inputs information for sensor rate calculation.

The information for sensor rate calculation is the following pieces of information illustrated in Fig. 1.

(a) The sensor analysis information 21 input from the sensor information analysis unit 13
(b) The action plan information 22 input from the action plan determination unit 14
(c) The input information 23 input from the input unit 15
(d) The drive information 24 input from the drive control unit 17

(Step S102)

Next, in step S102, the sensor rate calculation unit 16 acquires an evaluation result for each of evaluation items corresponding to the pieces of input information.

The evaluation items corresponding to the pieces of input information are the evaluation items described with reference to Figs. 2 and 3, and are the following items.

The evaluation items corresponding to (a) the sensor analysis information 21 input from the sensor information analysis unit 13 are the following four evaluation items.

(a1) Presence or absence of an obstacle in a direction of travel
(a2) Whether or not sufficient clearance for traveling is secured on the periphery
(a3) Presence or absence of a blind spot in the direction of travel
(a4) Presence or absence of detection of a moving object such as a person or a traveling vehicle

The evaluation items corresponding to (b) the action plan information 22 input from the action plan determination unit 14 are the following three evaluation items.

(b1) Whether or not it is immediately after a start of movement
(b2) Whether or not it is immediately before arrival at a destination
(b3) Whether or not a movement route is a straight line

The evaluation item corresponding to (c) the input information 23 input from the input unit 15 is the following one evaluation item.
(c1) Whether or not it is a safe place
The evaluation item corresponding to (d) the drive information 24 input from the drive control unit 17 is the following one evaluation item.
(d1) Whether or not traveling speed or turning speed is high
In step S102, the sensor rate calculation unit 16 acquires the evaluation result for each of the evaluation items described above.

(Step S103)

Next, in step S103, the sensor rate calculation unit 16 calculates the sensor rate decrease allowable indexes $\alpha 1$ to $\alpha n$ corresponding to the respective evaluation items on the basis of the evaluation results of the evaluation items (evaluation items 1 to n) acquired in step S102.
The calculation processing of the sensor rate decrease allowable indexes $\alpha 1$ to $\alpha n$ is the processing described above with reference to Figs. 4 and 5.
For example, on the basis of the evaluation result of the evaluation item "(a1) presence or absence of an obstacle in a direction of travel", the "sensor rate decrease allowable index $\alpha 1$" is calculated indicating the degree to which the sensor rate is allowed to be decreased.
Similarly, for other evaluation items 2 to n, the "sensor rate decrease allowable indexes $\alpha 2$ to $\alpha n$" are calculated indicating the degree to which the sensor rate is allowed to be decreased.

(Step S104)

Next, in step S104, the sensor rate calculation unit 16 selects the minimum value from the sensor rate decrease allowable indexes $\alpha 1$ to $\alpha n$ corresponding to the respective evaluation items calculated in step S103.
For example, in the example illustrated in Fig. 5 described above, the sensor rate decrease allowable index $\alpha 2$ of the evaluation item 2 is selected.

(Step S105)

Next, in step S105, on the basis of the minimum value $\alpha$ of the sensor rate decrease allowable index selected in step S104, the sensor rate calculation unit 16 calculates the sensor rate R in accordance with a predefined sensor rate calculation formula.
The sensor rate R is calculated in accordance with (equation 1) described above, that is, (equation 1) indicated below.
[Expression 2]

$$R = R_{min}\left(\frac{\alpha}{\alpha_{max}}\right) + R_{max}(1 - \frac{\alpha}{\alpha_{max}}) \quad \text{... (equation 1)}$$

Note that, as described above, in the above (equation 1), the values of the parameters are as follows.

Rmin: allowable minimum value of the sensor rate R,
Rmax: allowable maximum value of the sensor rate R,
that is, the sensor rate R
is set to the value in the range of

$$Rmin \leq R \leq Rmax.$$

The relationship between the sensor rate R defined by the above (equation 1) and the final sensor rate decrease allowable index $\alpha$ is the relationship illustrated in Fig. 6.

(Step S106)

Next, in step S106, the sensor rate calculation unit 16 outputs the sensor rate R calculated in step S105 to the sensor control units 12.
The sensor control units 12 control the sensor rates in accordance with the sensor rates input from the sensor rate calculation unit 16.
Note that, the sensor rates each are either a sensor detection rate by the sensor or an output rate to the subsequent processing unit (sensor information analysis unit 13) of the sensor detection information.

(Step S107)

After the processing in step S106 is ended, it is determined in step S107 whether or not traveling processing is ended. For example, it is determined whether or not a predefined destination is reached.
In a case where the processing is not ended, the processing returns to step S101, and the processing in step S101 and subsequent steps is repeatedly executed depending on the input of new information for sensor rate calculation.
On the other hand, in a case where it is determined that the processing is ended, for example, the destination is reached, the processing according to the flow is completed.
With these processing steps, the sensor rate calculation unit 16 can complexly calculate the optimal sensor rate and perform the processing according to the calculated rate, on the basis of the information for sensor rate calculation such as the action plan, observation information, prior knowledge, that is,

(a) the sensor analysis information 21 input from the sensor information analysis unit 13,
(b) the action plan information 22 input from the action plan determination unit 14,
(c) the input information 23 input from the input unit 15, and
(d) the drive information 24 input from the drive control unit 17

acquired by the autonomous mobile device 10.
As a result, it is possible to achieve both reduction of power consumption and processing resources, and safe traveling, of the autonomous mobile device 10.

[6. Configuration example of information processing device]

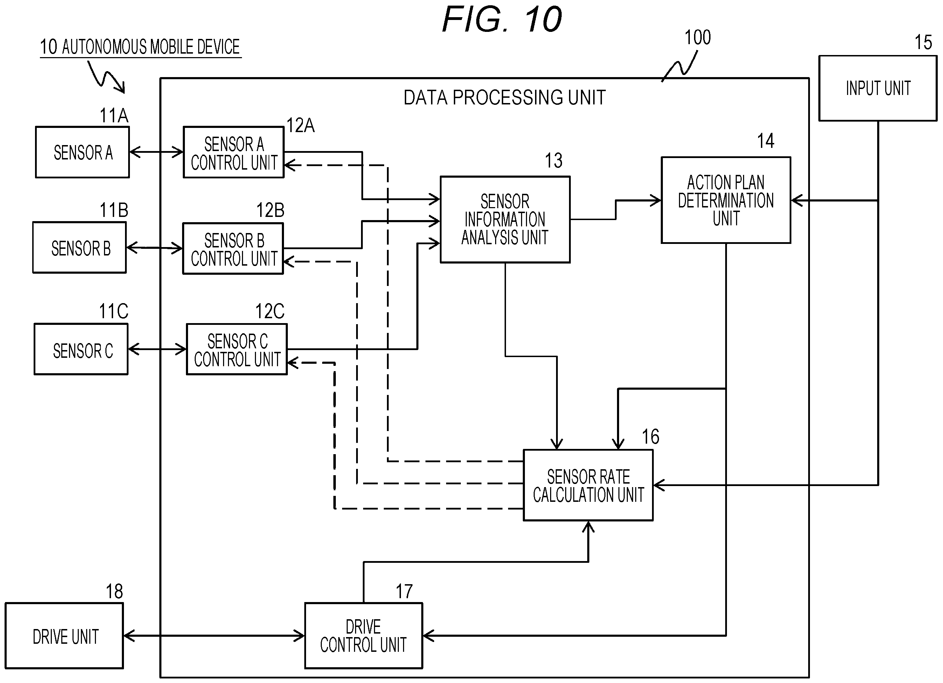

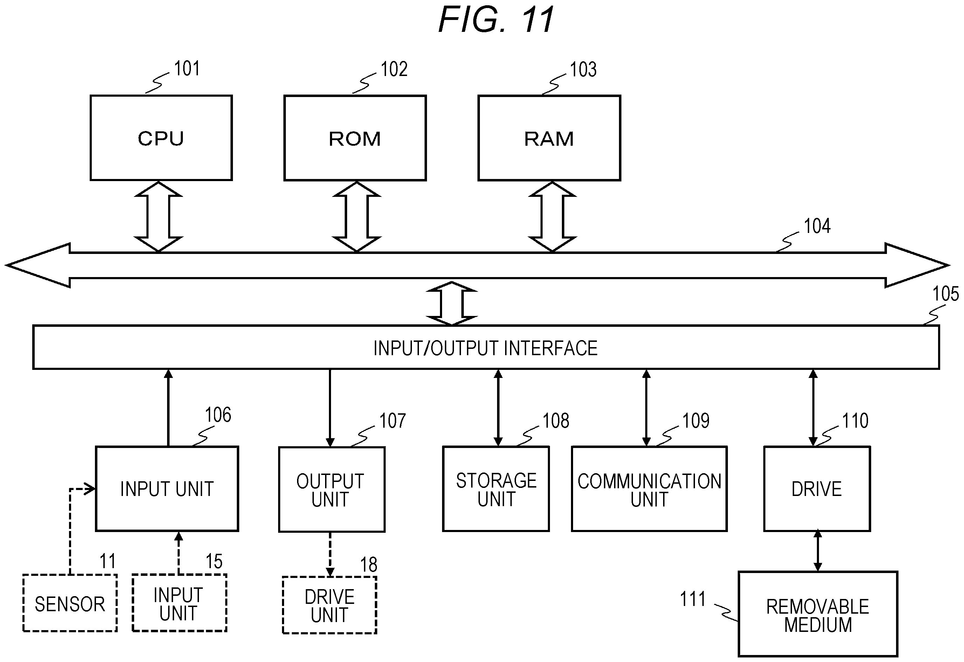

Next, with reference to Figs. 10 and 11, a specific hardware configuration example will be described of the information processing device described above with reference to Fig. 5.
The autonomous mobile device 10 described above with reference to Fig. 1 includes the sensors 11, the sensor control units 12, the sensor information analysis unit 13, the action plan determination unit 14, the input unit 15, the sensor rate calculation unit 16, the drive control unit 17, and the drive unit 18.
Among these processing units, the sensor control units 12, the sensor information analysis unit 13, the action plan determination unit 14, the input unit 15, the sensor rate calculation unit 16, and the drive control unit 17 can be configured by a data processing unit 100, specifically, for example, an information processing device such as a PC, as illustrated in Fig. 10.

A specific hardware configuration example will be described of the data processing unit 100 with reference to Fig. 11.

The data processing unit 100 can be implemented by a hardware configuration illustrated in Fig. 11, for example.

The hardware configuration illustrated in Fig. 11 will be described.

A central processing unit (CPU) 101 functions as a data processing unit that executes various types of processing in accordance with a program stored in read only memory (ROM) 102 or a storage unit 108. For example, the processing is executed according to the sequence described in the above-described embodiments. Random access memory (RAM) 103 stores the program executed by the CPU 101, data, and the like. These CPU 101, ROM 102, and RAM 103 are connected to each other by a bus 104.

The CPU 101 is connected to an input/output interface 105 via the bus 104, and the input/output interface 105 is connected to: an input unit 106 including various switches, a keyboard, a touch panel, a mouse, a microphone, and a status data acquisition unit such as a sensor, a camera, and a GPS, and the like; and an output unit 107 including a display, a speaker, and the like.

Note that, input information from the sensors 11 and the input unit 15 illustrated in Fig. 10 is also input to the input unit 106.

Furthermore, the output unit 107 also outputs drive information for the drive unit 18 illustrated in Fig. 10.

The CPU 101 inputs commands, status data, and the like input from the input unit 106, executes various types of processing, and outputs processing results to the output unit 107, for example.

The storage unit 108 connected to the input/output interface 105 includes, for example, a hard disk or the like, and stores the program executed by the CPU 101 and various data. The communication unit 109 functions as a data communication transmission/reception unit via a network such as the Internet or a local area network, and communicates with an external device.

A drive 110 connected to the input/output interface 105 drives a removable medium 111 such as a magnetic disk, an optical disk, a magneto-optical disk, or a semiconductor memory such as a memory card, and executes data recording or reading.

[7. Summary of configuration of present disclosure]

In the above, the embodiments of the present disclosure have been described in detail with reference to specific embodiments. However, it is self-evident that those skilled in the art can make modifications and substitutions of the embodiments without departing from the gist of the present disclosure. In other words, the present invention has been disclosed in the form of exemplification, and should not be interpreted restrictively. To determine the gist of the present disclosure, the scope of claims should be taken into consideration.

Note that, the technology disclosed in this specification can have the following configuration.

(1) An information processing device including:

a sensor information analysis unit that generates sensor analysis information by inputting output information from a sensor;
an action plan determination unit that generates an action plan by inputting the sensor analysis information;
a sensor rate calculation unit that calculates an optimal sensor rate of the sensor on the basis of at least one of the sensor analysis information or the action plan information; and
a sensor control unit that adjusts an output from the sensor to the optimal sensor rate.

(2) The information processing device according to (1), in which
the sensor control unit
adjusts either a sensing rate of the sensor or an output rate of sensor output information from the sensor control unit to the optimal sensor rate.
(3) The information processing device according to (1) or (2), further including
an input unit that inputs at least a target point, in which
the sensor rate calculation unit
calculates the optimal sensor rate of the sensor on the basis of input information from the input unit.
(4) The information processing device according to any of (1) to (3), in which
the sensor rate calculation unit
calculates the optimal sensor rate of the sensor on the basis of drive information input from a drive control unit.
(5) The information processing device according to any of (1) to (4), in which

the sensor rate calculation unit

calculates a sensor rate decrease allowable index indicating a degree to which a sensor rate is allowed to be decreased for each of one or more evaluation items using at least one of the sensor analysis information or the action plan information, and

selects a minimum sensor rate decrease allowable index among a plurality of the sensor rate decrease allowable indexes corresponding to the plurality of evaluation items calculated, and calculates the optimal sensor rate by using the sensor rate decrease allowable index selected.

(6) The information processing device according to (5), in which

the sensor rate calculation unit

calculates a sensor rate decrease allowable index in a predefined sensor rate decrease allowable index allowable range for each of the evaluation items.

(7) The information processing device according to (5) or (6), in which

the sensor rate calculation unit

defines an allowable maximum value and an allowable minimum value of the sensor rate in advance, and

calculates the optimal sensor rate within a range between the allowable maximum value and the allowable minimum value of the sensor rate.

(8) The information processing device according to any of (1) to (7), in which

the sensor rate calculation unit

calculates a sensor rate decrease allowable index indicating a degree to which a sensor rate is allowed to be decreased for each of one or more evaluation items using at least one of

> (a) the sensor analysis information,
> (b) the action plan information,
> (c) input information from an input unit that inputs at least a target point, or
> (d) drive information input from a drive control unit, and

selects a minimum sensor rate decrease allowable index among a plurality of the sensor rate decrease allowable indexes corresponding to the plurality of evaluation items calculated, and calculates the optimal sensor rate by using the sensor rate decrease allowable index selected.

(9) The information processing device according to any of (1) to (8), in which

the sensor rate calculation unit

calculates a sensor rate decrease allowable index indicating a degree to which a sensor rate is allowed to be decreased for each of evaluation items of

> (a1) presence or absence of an obstacle in a direction of travel,
> (a2) whether or not sufficient clearance for traveling is secured on the periphery,
> (a3) presence or absence of a blind spot in the direction of travel, and
> (a4) presence or absence of detection of a moving object such as a person or a traveling vehicle
> as evaluation items using the sensor analysis information, and

selects a minimum sensor rate decrease allowable index among a plurality of the sensor rate decrease allowable indexes calculated, and calculates the optimal sensor rate by using the sensor rate decrease allowable index selected.

(10) The information processing device according to any of (1) to (9), in which

the sensor rate calculation unit

calculates a sensor rate decrease allowable index indicating a degree to which a sensor rate is allowed to be decreased for each of evaluation items of

> (b1) whether or not it is immediately after a start of movement,
> (b2) whether or not it is immediately before arrival at a destination, and
> (b3) whether or not a movement route is a straight line

as evaluation items using the action plan information, and

selects a minimum sensor rate decrease allowable index among a plurality of the sensor rate decrease allowable indexes calculated, and calculates the optimal sensor rate by using the sensor rate decrease allowable index selected.

(11) An autonomous mobile device including:

> a sensor;
> a sensor information analysis unit that generates sensor analysis information by inputting output information from the sensor;
an action plan determination unit that generates an action plan by inputting the sensor analysis information;
a drive control unit that executes drive control according to the action plan;
a drive unit that drives an autonomous mobile device in accordance with control of the drive control unit;
a sensor rate calculation unit that calculates an optimal sensor rate of the sensor on the basis of at least one of the sensor analysis information or the action plan information; and
a sensor control unit that adjusts an output from the sensor to the optimal sensor rate.

(12) The autonomous mobile device according to (11), in which
the drive unit
includes at least one of a motor, an accelerator, a brake, or a movement direction control mechanism.
(13) An information processing method executed in an information processing device, the information processing method including:

a sensor information analysis step in which a sensor information analysis unit generates sensor analysis information by inputting output information from a sensor;
an action plan determination step in which an action plan determination unit generates an action plan by inputting the sensor analysis information;
a sensor rate calculation step in which a sensor rate calculation unit calculates an optimal sensor rate of the sensor on the basis of at least one of the sensor analysis information or the action plan information; and
a sensor rate adjustment step in which a sensor control unit adjusts an output from the sensor to the optimal sensor rate.

(14) An autonomous mobile control method executed in an autonomous mobile device, the autonomous mobile control method including:

a sensor information analysis step in which a sensor information analysis unit generates sensor analysis information by inputting output information from a sensor;
an action plan determination step in which an action plan determination unit generates an action plan by inputting the sensor analysis information;
a drive control step in which a drive control unit executes drive control according to the action plan;
a step in which a drive unit drives the autonomous mobile device in accordance with control of the drive control unit;
a sensor rate calculation step in which a sensor rate calculation unit calculates an optimal sensor rate of the sensor on the basis of at least one of the sensor analysis information or the action plan information; and
a sensor rate adjustment step in which a sensor control unit adjusts an output from the sensor to the optimal sensor rate.

(15) A program that causes an information processing device to execute information processing, the information processing including:

a sensor information analysis step in which a sensor information analysis unit generates sensor analysis information by inputting output information from a sensor;
an action plan determination step in which an action plan determination unit generates an action plan by inputting the sensor analysis information;
a sensor rate calculation step in which a sensor rate calculation unit calculates an optimal sensor rate of the sensor on the basis of at least one of the sensor analysis information or the action plan information; and
a sensor rate adjustment step in which a sensor control unit adjusts an output from the sensor to the optimal sensor rate.

(16) A program that causes an autonomous mobile device to execute autonomous mobile control processing, the autonomous mobile control processing including:

a sensor information analysis step in which a sensor information analysis unit generates sensor analysis information by inputting output information from a sensor;
an action plan determination step in which an action plan determination unit generates an action plan by inputting the sensor analysis information;
a drive control step in which a drive control unit executes drive control according to the action plan;

a step in which a drive unit drives the autonomous mobile device in accordance with control of the drive control unit;

a sensor rate calculation step in which a sensor rate calculation unit calculates an optimal sensor rate of the sensor on the basis of at least one of the sensor analysis information or the action plan information; and

a sensor rate adjustment step in which a sensor control unit adjusts an output from the sensor to the optimal sensor rate.

Furthermore, the series of processing steps described in the specification can be executed by hardware, software, or a combination of both. In the case of executing processing by software, it is possible to install and execute a program recording the processing sequence in a memory in a computer incorporated in dedicated hardware, or to install and execute the program in a general-purpose computer capable of executing various types of processing. For example, the program can be recorded in a recording medium in advance. In addition to installing from the recording medium to the computer, the program can be received via a network such as a local area network (LAN) or the Internet, and installed in the recording medium such as a built-in hard disk.

Note that, the various types of processing described in the specification are not only executed in chronological order in accordance with the description but also may be executed in parallel or individually depending on the processing capability of the device that executes the processing or depending on necessity. Furthermore, in this specification, the term "system" is a logical group configuration of a plurality of devices, and is not limited to the one in which the devices of each configuration are in the same housing.

INDUSTRIAL APPLICABILITY

As described above, according to the configuration of the embodiment of the present disclosure, the autonomous mobile device is implemented that adjusts the sensor rate according to the situation, and enables both reduction of power consumption and processing resources, and safe traveling.

Specifically, for example, the autonomous mobile device includes: a sensor; a sensor information analysis unit that generates sensor analysis information by inputting output information from the sensor; an action plan determination unit that generates an action plan by inputting the sensor analysis information; a sensor rate calculation unit that calculates an optimal sensor rate of the sensor on the basis of at least one of the sensor analysis information or the action plan information; and a sensor control unit that adjusts either a sensing rate of the sensor or an output rate of sensor output information to the optimal sensor rate.

With this configuration, the autonomous mobile device is implemented that adjusts the sensor rate according to the situation, and enables both reduction of power consumption and processing resources, and safe traveling.

REFERENCE SIGNS LIST

| 10 | Autonomous mobile device |
|---|---|
| 11 | Sensor |
| 12 | Sensor control unit |
| 13 | Sensor information analysis unit |
| 14 | Action plan determination unit |
| 15 | Input unit |
| 16 | Sensor rate calculation unit |
| 17 | Drive control unit |
| 18 | Drive unit |
| 101 | CPU |
| 102 | ROM |
| 103 | RAM |
| 104 | Bus |
| 105 | Input/output interface |
| 106 | Input unit |
| 107 | Output unit |
| 108 | Storage unit |
| 109 | Communication unit |
| 110 | Drive |
| 111 | Removable medium |

**EP 3 686 864 A1**

**Claims**

1. An information processing device comprising:

   a sensor information analysis unit that generates sensor analysis information by inputting output information from a sensor;
   an action plan determination unit that generates an action plan by inputting the sensor analysis information;
   a sensor rate calculation unit that calculates an optimal sensor rate of the sensor on a basis of at least one of the sensor analysis information or the action plan information; and
   a sensor control unit that adjusts an output from the sensor to the optimal sensor rate.

2. The information processing device according to claim 1, wherein
   the sensor control unit
   adjusts either a sensing rate of the sensor or an output rate of sensor output information from the sensor control unit to the optimal sensor rate.

3. The information processing device according to claim 1, further comprising
   an input unit that inputs at least a target point, wherein
   the sensor rate calculation unit
   calculates the optimal sensor rate of the sensor on a basis of input information from the input unit.

4. The information processing device according to claim 1, wherein
   the sensor rate calculation unit
   calculates the optimal sensor rate of the sensor on a basis of drive information input from a drive control unit.

5. The information processing device according to claim 1, wherein
   the sensor rate calculation unit
   calculates a sensor rate decrease allowable index indicating a degree to which a sensor rate is allowed to be decreased for each of one or more evaluation items using at least one of the sensor analysis information or the action plan information, and
   selects a minimum sensor rate decrease allowable index among a plurality of the sensor rate decrease allowable indexes corresponding to the plurality of evaluation items calculated, and calculates the optimal sensor rate by using the sensor rate decrease allowable index selected.

6. The information processing device according to claim 5, wherein
   the sensor rate calculation unit
   calculates a sensor rate decrease allowable index in a predefined sensor rate decrease allowable index allowable range for each of the evaluation items.

7. The information processing device according to claim 5, wherein
   the sensor rate calculation unit
   defines an allowable maximum value and an allowable minimum value of the sensor rate in advance, and
   calculates the optimal sensor rate within a range between the allowable maximum value and the allowable minimum value of the sensor rate.

8. The information processing device according to claim 1, wherein
   the sensor rate calculation unit
   calculates a sensor rate decrease allowable index indicating a degree to which a sensor rate is allowed to be decreased for each of one or more evaluation items using at least one of

   (a) the sensor analysis information,
   (b) the action plan information,
   (c) input information from an input unit that inputs at least a target point, or
   (d) drive information input from a drive control unit, and

   selects a minimum sensor rate decrease allowable index among a plurality of the sensor rate decrease allowable indexes corresponding to the plurality of evaluation items calculated, and calculates the optimal sensor rate by using the sensor rate decrease allowable index selected.

23

**9.** The information processing device according to claim 1, wherein
the sensor rate calculation unit
calculates a sensor rate decrease allowable index indicating a degree to which a sensor rate is allowed to be decreased for each of evaluation items of

(a1) presence or absence of an obstacle in a direction of travel,
(a2) whether or not sufficient clearance for traveling is secured on a periphery,
(a3) presence or absence of a blind spot in the direction of travel, and
(a4) presence or absence of detection of a moving object such as a person or a traveling vehicle

as evaluation items using the sensor analysis information, and
selects a minimum sensor rate decrease allowable index among a plurality of the sensor rate decrease allowable indexes calculated, and calculates the optimal sensor rate by using the sensor rate decrease allowable index selected.

**10.** The information processing device according to claim 1, wherein
the sensor rate calculation unit
calculates a sensor rate decrease allowable index indicating a degree to which a sensor rate is allowed to be decreased for each of evaluation items of

(b1) whether or not it is immediately after a start of movement,
(b2) whether or not it is immediately before arrival at a destination, and
(b3) whether or not a movement route is a straight line

as evaluation items using the action plan information, and
selects a minimum sensor rate decrease allowable index among a plurality of the sensor rate decrease allowable indexes calculated, and calculates the optimal sensor rate by using the sensor rate decrease allowable index selected.

**11.** An autonomous mobile device comprising:

a sensor;
a sensor information analysis unit that generates sensor analysis information by inputting output information from the sensor;
an action plan determination unit that generates an action plan by inputting the sensor analysis information;
a drive control unit that executes drive control according to the action plan;
a drive unit that drives an autonomous mobile device in accordance with control of the drive control unit;
a sensor rate calculation unit that calculates an optimal sensor rate of the sensor on a basis of at least one of the sensor analysis information or the action plan information; and
a sensor control unit that adjusts an output from the sensor to the optimal sensor rate.

**12.** The autonomous mobile device according to claim 11, wherein
the drive unit
includes at least one of a motor, an accelerator, a brake, or a movement direction control mechanism.

**13.** An information processing method executed in an information processing device, the information processing method comprising:

a sensor information analysis step in which a sensor information analysis unit generates sensor analysis information by inputting output information from a sensor;
an action plan determination step in which an action plan determination unit generates an action plan by inputting the sensor analysis information;
a sensor rate calculation step in which a sensor rate calculation unit calculates an optimal sensor rate of the sensor on a basis of at least one of the sensor analysis information or the action plan information; and
a sensor rate adjustment step in which a sensor control unit adjusts an output from the sensor to the optimal sensor rate.

**14.** An autonomous mobile control method executed in an autonomous mobile device, the autonomous mobile control method comprising:

a sensor information analysis step in which a sensor information analysis unit generates sensor analysis information by inputting output information from a sensor;

an action plan determination step in which an action plan determination unit generates an action plan by inputting the sensor analysis information;

a drive control step in which a drive control unit executes drive control according to the action plan;

a step in which a drive unit drives the autonomous mobile device in accordance with control of the drive control unit;

a sensor rate calculation step in which a sensor rate calculation unit calculates an optimal sensor rate of the sensor on a basis of at least one of the sensor analysis information or the action plan information; and

a sensor rate adjustment step in which a sensor control unit adjusts an output from the sensor to the optimal sensor rate.

15. A program that causes an information processing device to execute information processing, the information processing including:

a sensor information analysis step in which a sensor information analysis unit generates sensor analysis information by inputting output information from a sensor;

an action plan determination step in which an action plan determination unit generates an action plan by inputting the sensor analysis information;

a sensor rate calculation step in which a sensor rate calculation unit calculates an optimal sensor rate of the sensor on a basis of at least one of the sensor analysis information or the action plan information; and

a sensor rate adjustment step in which a sensor control unit adjusts an output from the sensor to the optimal sensor rate.

16. A program that causes an autonomous mobile device to execute autonomous mobile control processing, the autonomous mobile control processing including:

a sensor information analysis step in which a sensor information analysis unit generates sensor analysis information by inputting output information from a sensor;

an action plan determination step in which an action plan determination unit generates an action plan by inputting the sensor analysis information;

a drive control step in which a drive control unit executes drive control according to the action plan;

a step in which a drive unit drives the autonomous mobile device in accordance with control of the drive control unit;

a sensor rate calculation step in which a sensor rate calculation unit calculates an optimal sensor rate of the sensor on a basis of at least one of the sensor analysis information or the action plan information; and

a sensor rate adjustment step in which a sensor control unit adjusts an output from the sensor to the optimal sensor rate.

# FIG. 1

OUTPUT SENSOR DETECTION INFORMATION TO SENSOR INFORMATION ANALYSIS UNIT, AND CONTROL SENSOR RATE (DETECTION RATE OR OUTPUT RATE)

10 AUTONOMOUS MOBILE DEVICE

15 INPUT UNIT

23 INPUT INFORMATION

11A SENSOR A

12A SENSOR A CONTROL UNIT

11B SENSOR B

12B SENSOR B CONTROL UNIT

11C SENSOR C

12C SENSOR C CONTROL UNIT

13 SENSOR INFORMATION ANALYSIS UNIT

14 ACTION PLAN DETERMINATION UNIT

21 SENSOR ANALYSIS INFORMATION (OBSTACLE, PERSON, ENVIRONMENT, AND THE LIKE)

22 ACTION PLAN INFORMATION (DETERMINED ON THE BASIS OF INPUT INFORMATION AND SENSOR ANALYSIS INFORMATION)

SENSOR RATE INFORMATION

16 SENSOR RATE CALCULATION UNIT

24 DRIVE INFORMATION

18 DRIVE UNIT

17 DRIVE CONTROL UNIT

EP 3 686 864 A1

## FIG. 2

| | INFORMATION FOR SENSOR RATE CALCULATION | EVALUATION ITEM FOR SENSOR RATE CALCULATION | | SENSOR RATE CALCULATION MODE | DESCRIPTION |
|---|---|---|---|---|---|
| (a) | SENSOR ANALYSIS INFORMATION | (a1) | PRESENCE OR ABSENCE OF OBSTACLE IN DIRECTION OF TRAVEL | IN CASE WHERE THERE IS OBSTACLE IN DIRECTION OF TRAVEL, SENSOR RATE IS INCREASED, AND IN CASE WHERE THERE IS NO OBSTACLE, SENSOR RATE IS DECREASED | IN CASE WHERE THERE IS OBSTACLE IN DIRECTION OF TRAVEL, DRIVE CONTROL IS NECESSARY FOR AVOIDING OBSTACLE, AND DETAILED SENSOR INFORMATION IS NECESSARY |
| | | (a2) | WHETHER OR NOT SUFFICIENT CLEARANCE FOR TRAVELING IS SECURED ON PERIPHERY | IN CASE WHERE SUFFICIENT CLEARANCE FOR TRAVELING IS SECURED ON PERIPHERY, SENSOR RATE IS DECREASED, AND IN CASE WHERE SUFFICIENT CLEARANCE IS NOT SECURED, SENSOR RATE IS INCREASED | IN CASE WHERE SUFFICIENT CLEARANCE FOR TRAVELING IS SECURED ON PERIPHERY, HIGH-PRECISION TRAVELING CONTROL IS UNNECESSARY, AND IN CASE WHERE SUFFICIENT CLEARANCE IS NOT SECURED, HIGH-PRECISION TRAVELING CONTROL IS NECESSARY |
| | | (a3) | PRESENCE OR ABSENCE OF BLIND SPOT IN DIRECTION OF TRAVEL | IN CASE WHERE THERE IS BLIND SPOT IN DIRECTION OF TRAVEL, SENSOR RATE IS INCREASED, AND IN CASE WHERE THERE IS NO BLIND SPOT, SENSOR RATE IS DECREASED | IN CASE WHERE THERE IS BLIND SPOT IN DIRECTION OF TRAVEL, IT IS NECESSARY TO QUICKLY DETECT OBSTACLE, SUDDEN RUSHING-OUT OBJECT, AND THE LIKE IN BLIND SPOT DIRECTION, AND SENSOR RATE IS INCREASED |
| | | (a4) | PRESENCE OR ABSENCE OF DETECTION OF MOVING OBJECT SUCH AS PERSON OR TRAVELING VEHICLE | IN CASE WHERE MOVING OBJECT SUCH AS PERSON OR TRAVELING VEHICLE IS DETECTED, SENSOR RATE IS INCREASED, AND IN CASE WHERE NO MOVING OBJECT IS DETECTED, SENSOR RATE IS DECREASED | IN CASE WHERE MOVING OBJECT SUCH AS PERSON OR TRAVELING VEHICLE IS DETECTED, IT IS NECESSARY TO AVOID MOVING OBJECT, AND SENSOR RATE IS INCREASED |

EP 3 686 864 A1

## FIG. 3

| | INFORMATION FOR SENSOR RATE CALCULATION | EVALUATION ITEM FOR SENSOR RATE CALCULATION | | SENSOR RATE CALCULATION MODE | DESCRIPTION |
|---|---|---|---|---|---|
| (b) | ACTION PLAN INFORMATION | (b1) | WHETHER OR NOT IT IS IMMEDIATELY AFTER START OF MOVEMENT | IMMEDIATELY AFTER START OF MOVEMENT, SENSOR RATE IS INCREASED, AND IN CASE WHERE IT IS NOT IMMEDIATELY AFTER START OF MOVEMENT, SENSOR RATE IS DECREASED | IMMEDIATELY AFTER START OF MOVEMENT, DETAILED SENSOR INFORMATION IS NECESSARY FOR IDENTIFICATION OF SELF POSITION AND GRASP OF SURROUNDING SITUATION |
| | | (b2) | WHETHER OR NOT IT IS IMMEDIATELY BEFORE ARRIVAL AT DESTINATION | IMMEDIATELY BEFORE ARRIVAL AT DESTINATION, SENSOR RATE IS INCREASED, AND IN CASE WHERE IT IS NOT IMMEDIATELY BEFORE ARRIVAL AT DESTINATION, SENSOR RATE IS DECREASED | IMMEDIATELY BEFORE ARRIVAL AT DESTINATION, DETAILED SENSOR INFORMATION IS NECESSARY FOR COLLATION BETWEEN DESTINATION AND SELF POSITION, ACCURATE PARKING, AND THE LIKE |
| | | (b3) | WHETHER OR NOT MOVEMENT ROUTE IS STRAIGHT LINE | IN CASE WHERE MOVEMENT ROUTE IS STRAIGHT LINE, SENSOR RATE IS DECREASED, AND IN CASE WHERE MOVEMENT ROUTE IS NOT STRAIGHT LINE, SENSOR RATE IS INCREASED | IN CASE WHERE MOVEMENT ROUTE IS STRAIGHT LINE, FINE MOVEMENT DIRECTION CONTROL IS UNNECESSARY, AND THERE IS NO PROBLEM EVEN IF SENSOR RATE IS DECREASED |
| (c) | INPUT INFORMATION | (c1) | WHETHER OR NOT IT IS SAFE PLACE | IN SAFE PLACE, SENSOR RATE IS DECREASED, AND IN DANGEROUS PLACE, SENSOR RATE IS INCREASED | IN DANGEROUS PLACE SUCH AS INTERSECTION, CROSSWALK, OR JUNCTION, SENSOR RATE IS INCREASED TO AVOID COLLISION OR THE LIKE |
| (d) | DRIVE INFORMATION | (d1) | WHETHER OR NOT TRAVELING SPEED OR TURNING SPEED IS HIGH | IN CASE WHERE TRAVELING SPEED OR TURNING SPEED IS HIGH, SENSOR RATE IS INCREASED, AND IN CASE WHERE TRAVELING SPEED OR TURNING SPEED IS LOW, SENSOR RATE IS DECREASED | IN CASE WHERE TRAVELING SPEED OR TURNING SPEED IS HIGH, QUICK DRIVE CONTROL IS NECESSARY, AND DETAILED SENSOR INFORMATION IS NECESSARY |

EP 3 686 864 A1

FIG. 4

(1) CASE WHERE MOVEMENT ROUTE IS STRAIGHT

S4
S3
S2
S1

(2) CASE WHERE MOVEMENT ROUTE IS CURVE

C4
C3
C2
C1

EP 3 686 864 A1

FIG. 5

EP 3 686 864 A1

# FIG. 6

## FIG. 7

T=0

SCHEDULED ROUTE

SENSOR DETECTION RANGE

50

OBSTACLE ON RIGHT SIDE CANNOT BE DETECTED

SENSOR RATE REMAINS LOW

T=3

50

COME IN CONTACT WITH OBSTACLE ON RIGHT SIDE

EP 3 686 864 A1

## FIG. 8

T=0

SCHEDULED ROUTE

SENSOR DETECTION RANGE

70

CHANGE SENSOR RATE TO HIGH RATE

SENSOR RATE CONTROL BASED ON DETERMINATION THAT MOVEMENT ROUTE IS NOT STRAIGHT LINE

T=1

70

DETECT OBSTACLE ON RIGHT SIDE

T=2

70

DETECT OBSTACLE ON RIGHT SIDE

T=3

70

AVOID CONTACT WITH OBSTACLE ON RIGHT SIDE

# FIG. 9

```
                    ┌──────────────┐
                    │    START     │
                    └──────┬───────┘
                           │                                    S101
                           ▼
      ┌────────────────────────────────────────┐
      │      INPUT INFORMATION FOR SENSOR       │
      │           RATE CALCULATION              │
      │  (SENSOR INFORMATION, ACTION PLAN       │
      │   INFORMATION, INPUT INFORMATION,       │
      │          DRIVE INFORMATION)             │
      └────────────────────┬───────────────────┘
                           │                                    S102
                           ▼
      ┌────────────────────────────────────────┐
      │        ACQUIRE EVALUATION RESULT        │
      │      FOR EACH OF EVALUATION ITEMS       │
      │       CORRESPONDING TO PIECES           │
      │          OF INPUT INFORMATION           │
      └────────────────────┬───────────────────┘
                           │                                    S103
                           ▼
      ┌────────────────────────────────────────┐
      │  CALCULATE SENSOR RATE DECREASE         │
      │  ALLOWABLE INDEXES α1 TO αn             │
      │  CORRESPONDING TO RESPECTIVE            │
      │         EVALUATION ITEMS                │
      └────────────────────────────────────────┘
```

SELECT MINIMUM VALUE OF SENSOR RATE DECREASE ALLOWABLE INDEXES $\alpha 1$ TO $\alpha n$ CORRESPONDING TO RESPECTIVE EVALUATION ITEMS — S104

CALCULATE SENSOR RATE R BY APPLYING MINIMUM SENSOR RATE DECREASE ALLOWABLE INDEX $\alpha$ — S105

OUTPUT CALCULATED SENSOR RATE R TO SENSOR CONTROL UNIT — S106

PROCESSING IS ENDED? (DESTINATION IS REACHED?) — S107

No

Yes

END

# FIG. 10

10 AUTONOMOUS MOBILE DEVICE

DATA PROCESSING UNIT 100

15 INPUT UNIT

11A SENSOR A

12A SENSOR A CONTROL UNIT

11B SENSOR B

12B SENSOR B CONTROL UNIT

11C SENSOR C

12C SENSOR C CONTROL UNIT

13 SENSOR INFORMATION ANALYSIS UNIT

14 ACTION PLAN DETERMINATION UNIT

16 SENSOR RATE CALCULATION UNIT

18 DRIVE UNIT

17 DRIVE CONTROL UNIT

EP 3 686 864 A1

## FIG. 11

EP 3 686 864 A1

## INTERNATIONAL SEARCH REPORT

| International application No. |
| --- |
| PCT/JP2018/026527 |

| A. CLASSIFICATION OF SUBJECT MATTER |
| --- |
| Int.Cl. G08G1/16(2006.01)i, G01C21/26(2006.01)i, G05D1/02(2006.01)i |

According to International Patent Classification (IPC) or to both national classification and IPC

| B. FIELDS SEARCHED |
| --- |
| Minimum documentation searched (classification system followed by classification symbols)<br>Int.Cl. G08G1/16, G01C21/26, G05D1/02 |

| Documentation searched other than minimum documentation to the extent that such documents are included in the fields searched |
| --- |
| Published examined utility model applications of Japan   1922–1996<br>Published unexamined utility model applications of Japan   1971–2018<br>Registered utility model specifications of Japan   1996–2018<br>Published registered utility model applications of Japan   1994–2018 |

| Electronic data base consulted during the international search (name of data base and, where practicable, search terms used) |
| --- |
| |

### C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2015-121959 A (MITSUBISHI ELECTRIC CORPORATION) 02 July 2015, paragraphs [0048]-[0054], fig. 9, etc.<br>(Family: none) | 1-8, 11-16<br>9, 10 |
| Y | JP 2015-135301 A (MITSUBISHI ELECTRIC CORPORATION) 27 July 2015, paragraphs [0014]-[0016], etc.<br>(Family: none) | 1-8, 11-16 |
| Y | JP 2006-168525 A (DENSO CORPORATION) 29 June 2006, paragraphs [0048], [0052], etc.<br>(Family: none) | 5-8 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06.09.2018 | Date of mailing of the international search report<br>18.09.2018 |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/026527 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2016-166767 A (MITSUBISHI ELECTRIC CORPORATION) 15 September 2016, entire text, all drawings (Family: none) | 1-16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11212640 A

- JP 2011207444 A